Europäisches Patentamt

European Patent Office

Office européen des brevets

(19)

(11) **EP 1 441 485 A2**

## (12) EUROPEAN PATENT APPLICATION

(43) Date of publication:
**28.07.2004 Bulletin 2004/31**

(51) Int Cl.⁷: **H04L 29/06**, H04L 9/08

(21) Application number: **04001361.7**

(22) Date of filing: **22.01.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **24.01.2003 JP 2003015866**

(71) Applicant: **MATSUSHITA ELECTRIC INDUSTRIAL
CO., LTD.**
**Kadoma-shi, Osaka 571-8501 (JP)**

(72) Inventors:
• **Gotoh, Yukie**
  **Hirakata-shi Osaka-fu 573-0016 (JP)**

• **Yokota, Hiroshi**
  **Suita-shi Osaka-fu 564-0033 (JP)**
• **Tamai, Masaaki**
  **Sakurai-shi Nara-ken 633-0001 (JP)**
• **Tsuji, Atsuhiro**
  **Mino-shi Osaka-fu 562-0005 (JP)**
• **Takagaki, Keiichi**
  **Osaka-shi Osaka-fu 532-0022 (JP)**

(74) Representative: **Gassner, Wolfgang, Dr.**
**Patentanwalt,**
**Nägelsbachstrasse 49a**
**91052 Erlangen (DE)**

(54) **Common key exchanging method and communication device**

(57) Upon receipt of a public value X from a device A, a device B estimates a time to be taken for calculation of a public value Y and a time to be taken for calculation of a common key K, and then calculates a required operation time Tb required at the device B for a key exchanging process for transmission to the device A to report a response delay time (S306 and S307). Then, the device B actually calculates the public value Y and the common key K (S309 and S310). Upon receipt of the required operation time Tb, the device A extends a waiting limit (timeout time) for a response from the device B to a time when the required operation time Tb elapses from the reception (S311).

FIG. 3

**Description**

BACKGROUND OF THE INVENTION

Field of the Invention

The present invention relates to common key exchanging methods and communication devices. More specifically, the present invention relates to a common key exchanging method for exchanging and sharing a secret key for encryption and authentication among devices which transmit and receive highly confidential data over a network.

Description of the Background Art

The recent widespread use of the Internet has boosted services via networks, such as e-mail services and electronic commerce services. Such boosts have also caused an increase of so-called "home networking appliances" capable of connecting to networks from home. The range of home networking appliances extends even to "white goods" , which are household appliances such as air conditioners and microwave ovens. Among services that have been suggested are services for controlling an air conditioner from outside home, downloading a cooking program from a server to a microwave oven, etc. This prevalent use of networks, however, has caused some problems, including manipulation and theft of electronic data by malicious third party and identity theft for receiving services. To get around these problems, it is important to take security measures on networks.

As part of efforts to achieve a security function on networks, various protocols using encryption and authentication techniques have been standardized and put to practical use. One example of a protocol defining a security function at an IP packet level is IPsec (IP security protocol). IPsec is a protocol standardized by the Internet Engineering Task Force (IETF), and its contents are defined by "RFC2401 (URL: http://www.ietf.org/rfc/rfc2401.txt)" of IETF specifications and other documents. This IPsec can protect the contents of communication against thieves by encrypting IP packets themselves, thereby preventing leakage of secret information. Also, with an additional data value for authentication (integrity check) being added to each IP packet, it can be ensured that data has not been manipulated while coming over a communication route.

Prior to transmission and reception of encrypted/authenticated data among devices by using a protocol such as IPsec, a key for use in encryption and authentication (hereinafter referred to as a session common key) has to be shared among devices. Here, it might not be suitable for a system for communication among a large number of users to manually set such a session common key. Moreover, using the same session common key for a long period of time might increase the possibility of decrypting the session common key by third party. In order to prevent such decryption, the session common key has to be renewed as required. For this reason, processes of generating, distributing, exchanging, and renewing a session common key shared among devices are preferably secured, simple, and automatic. Various techniques for such processes have been suggested as follows.

For example, one of the basic technologies used as a scheme of exchanging a single secret symmetric key (session common key) between two devices is the Diffie-Hellman method (hereinafter referred to as DH method). This DH method is also used in the Internet Key Exchange (IKE), which is defined as a standard of a key exchange/management protocol of IPsec and is disclosed in "RFC2407 (URL: http://www.ietf.org/rfc/rfc2407.txt)", "RFC2408 (URL: http://www.ietf.org/rfc/rfc2408.txt)", and "RFC2409 (URL: http://www.ietf.org/rfc/rfc2409.txt)" of IETF specifications.

As a specific example of conventional common key exchanging (sharing and distributing) methods, the DH method is described below.

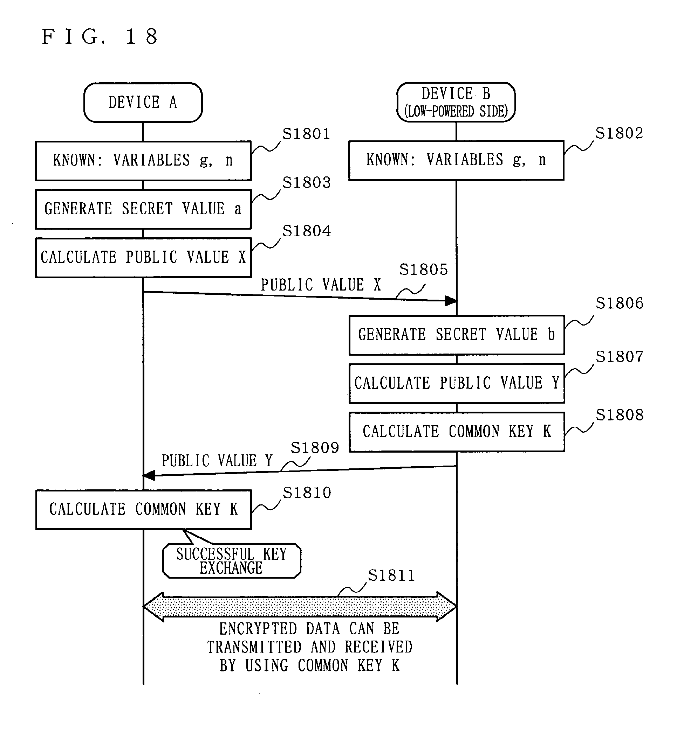

FIG. 18 is an illustration for describing the DH method defined in "RFC2631 (URL: http://www.ietf.org/rfc/rfc2631.txt)" of IETF specifications. Note that a device A and a device B in FIG. 18 form a pair of devices which perform encrypted communications and key exchange. Also note that variables $g$ and $n$ are known to the device A and the device B prior to key exchange (steps S1801 and S1802). These variables $g$ and $n$ are used for an operation in a key exchanging process, and may be known to third party (thieves).

First, the device A generates its unique secret value $a$ (step S1803). The device A then uses this secret value $a$, the variable $g$, and the variable $n$ to calculate a public value X by using the following Equation (1) (step S1804).

$$X = g^{\wedge a} \bmod n \tag{1}$$

In this Equation (1), the number of secret value $a$-th power of the variable $g$ is first calculated (exponential operation), the resultant value is divided by the variable $n$, and its remainder is taken as the public value X (modulo operation). The device A then transmits the calculated public value X to the device B (step S1805).

On the other hand, upon receipt of the public value X from the device A, the device B generates its unique secret value *b* (step S1806). The device B then uses this secret value *b*, the variable *g*, and the variable n to calculate a public value Y by using Equation (2) shown below (step S1807). Furthermore, the device B uses the public value X received from the device A, the secret value *b*, and the variable *n* to calculate a session common key K by using Equation (3) shown below (step S1808).

$$Y = g^{\wedge b} \bmod n \qquad (2)$$

$$K = X^{\wedge b} \bmod n \qquad (3)$$

The device B then transmits the calculated public value Y to the device A (step S1809).

Finally, upon receipt of the public value Y from the device B, the device A uses this public value Y and the secret value *a* to calculate the session common key K by using the following Equation (4) (step S1810).

$$K = Y^{\wedge a} \bmod n \qquad (4)$$

Here, the above Equations (3) and (4) have a relationship represented by the following Equation (5).

$$Y^{\wedge a} \bmod n = X^{\wedge b} \bmod n = g^{\wedge (a x b)} \bmod n \qquad (5)$$

For this reason, the device A and the device B can calculate the same session common key K. Therefore, after calculating the session common key K, each device can transmit and receive encrypted/authenticated data by using this session common key K (step S1811).

As well known, it is very difficult for attackers to find the session common key K based on the public values X and Y and the variables *g* and *n*. This is known as the discrete logarithm problem. In particular, when the variable *n* is set to be significantly large (several hundreds to thousands of bits), it is practically impossible to solve the discrete logarithm. In this way, by using the DH method, the session common key K can be securely shared between the device A and the device B.

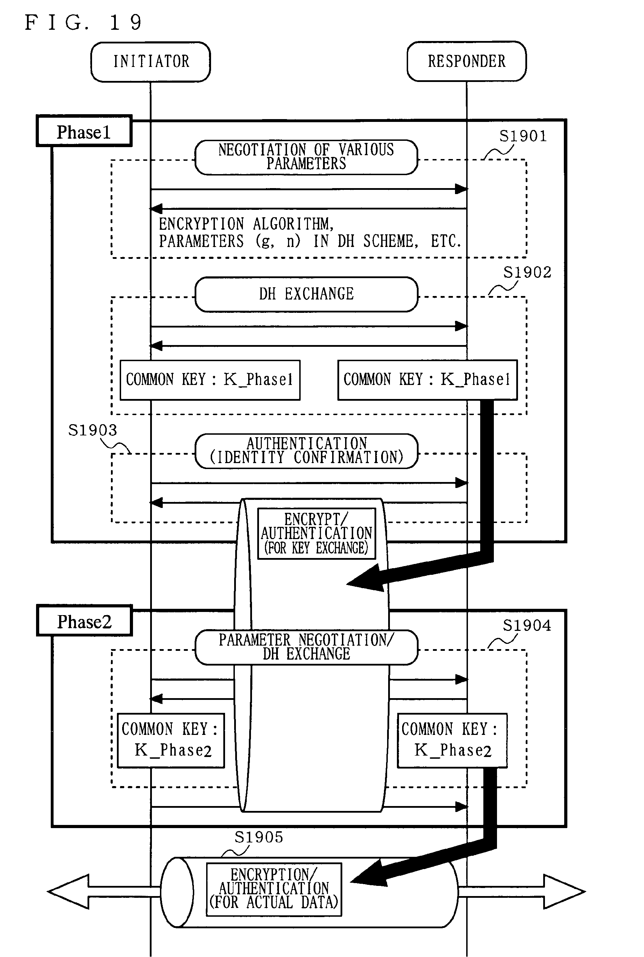

The above-mentioned IKE defines not only the procedure of the DH method but also a procedure prior and subsequently thereto carried out by the devices. A key exchanging method in the IKE is briefly described below by using FIG. 19. Note that, in the IKE, a device which first transmits a request for key exchange is called an initiator, and a device which receives that request is called a responder. Also note that IKE defines key exchange of two stages, Phase 1 and Phase 2.

First, in the stage of Phase 1, the initiator and the responder negotiate various parameters for use in key exchange and encryption/authentication (step S1901). For example, the variables *g* and *n* for use in the DH method and an encryption/authentication algorithm are determined in this step S1901. As for the variables *g* and *n*, determined are their values themselves, predetermined group numbers which can specify these variables *g* and *n*, or the like. Next, by using the key exchanging technique in the above-mentioned DH method, a session common key K_Phase 1 is shared (step S1902). Lastly in Phase 1, the initiator and the responder mutually perform a procedure of authenticating the identity of the counterpart (step S1903). A message for use in authentication in this step S1903 is encrypted/authenticated by a key based on the session common key K_Phase 1, and is then transmitted and received. Examples of information for authenticating each device are IDs and hash values. For example, after the session common key K_Phase 1, data exchanged in step S1902, etc., are concatenated and then used as an input value for a hash function, a hash value is calculated for use as the key for encryption/authentication of the messages in step S1903.

Next, in Phase 2, the encryption/authentication process to be performed on the data desired to be actually transmitted and received between the initiator and the responder is determined. As with step S1903, a message in this Phase 2 is encrypted/authenticated with the key based on the session common key K_Phase 1. In the first two messages in Phase 2, suggestion or notification of the variables *g* and *n*, negotiation of the encryption/authentication algorithm, etc., and exchange of the public values X and Y in the DH method are performed (step S1904). In Phase 2, the parameters (the variables *g* and *n* and the secret values *a* and *b*) can be set to be different from the parameters in Phase 1. Based on a session common key K_Phase 2 calculated in step S1904 by using the DH method, the initiator and the responder generate a key for encryption/authentication to be applied to the desired data, and then transmit and receive the encrypted/authenticated data.

Note that the IKE also defines a procedure of retransmitting a message which has been transmitted from one device but not yet reached the other device, and a procedure of updating the session common key.

As has been described above, the DH method includes the exponential operation and the modulo operation. Therefore, it is known that the processing load when numerical values having a large number of digits are used is very heavy. For example, in a case of DH group 2 defined in the IKE, the public values X and Y and the session common key K are calculated by using $g$ of 2 bits and $n$ of 1024 bits. However, the devices having incorporated therein a low-cost CPU, such as home networking appliances, are not expected to have a high calculation capability, and therefore might cause the following three problems.

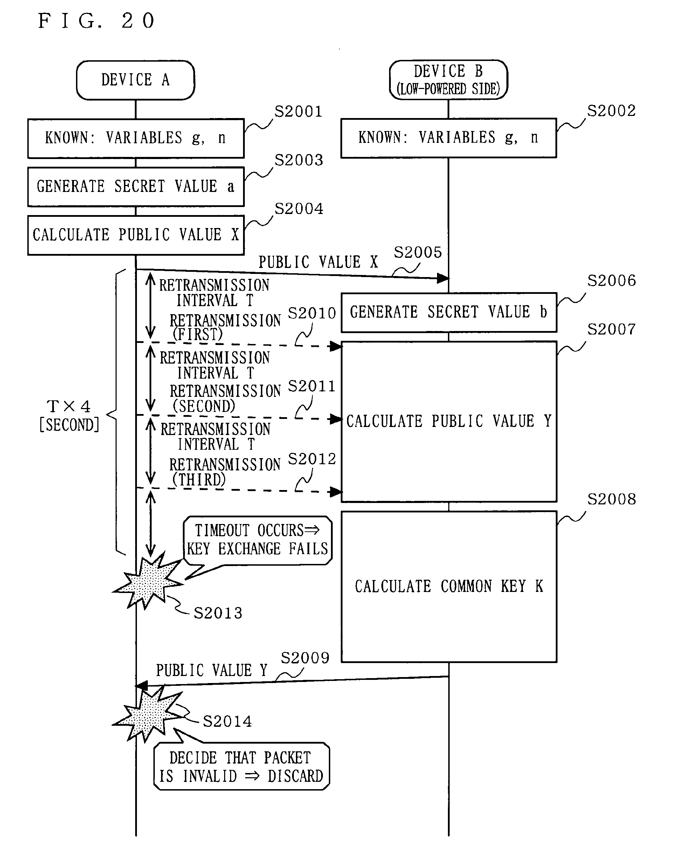

As a first problem, the key exchanging process might fail due to timeout detection by the counterpart device. FIG. 20 is a sequence diagram for describing this problem. Steps S2001 through S2006 in FIG. 20 are identical to steps S1801 through S1806 in FIG. 18, wherein the public value X in the DH method is transmitted from the device A to the device B. Next, as with step S1807 and S1808 in FIG. 18, the device B calculates the public value Y and the session common key K. However, due to the low calculation capability of the CPU, the device B requires an extremely long time to calculate them (steps S2007 and S2008).

Upon transmission of its public value X (step S2005), the device A waits for a response, that is, the public value Y, from the device B,. Normally, a process of retransmission and timeout detection is provided in case of packet loss on a communication route or failure of the counterpart device. In the example of FIG. 20, the device A retransmits a message of the public value X at every retransmission interval T [second] if no response comes from the device B (step S2010 through S2012). Then, if no response yet comes from the device B, the device A detects a timeout after a predetermined period of time (in the example of FIG. 20, $T \times 4$ [second]), and determines that key exchange has failed (step S2013).

Thereafter, even when the device B calculates the public value Y and the session common key K and then transmits the public value Y to the device A (step S2009), the device A has already reset the state of the key exchanging process with the device B. Therefore, the message including the public value Y is determined as being an invalid message, and is then discarded (step S2014).

As a second problem, the key having its expiration time might not have been renewed by that expiration time. In the IKE, an expiration time is set to the key in order to prevent the key from being decrypted while being used as it is for a long period of time. After a predetermined time has elapsed, the key cannot be used and another key is used instead. Specifically, when a key is generated upon success of a key exchange, an expiration time is set to that key. Alternatively, at the start of the key exchange procedure, an expiration time to be given to that key is determined between the device A and the device B. Before the expiration time has elapsed, another new key is generated and the currently-used key is switched to this new key. This process of renewing the key is called a re-key process. If it takes time to perform operations related to the DH method, the re-key process is delayed, which might make it impossible to renew the key by the expiration time. If the current key is used up by its expiration time, packet encryption cannot be performed after the expiration time has elapsed.

As a third problem, the heavy processing load might interfere with execution of other applications on the device. When a device having incorporated therein a low-powered CPU, such as a home networking appliance, executes a heavy-load arithmetic operation such as that of the DH method, only this arithmetic operation occupies the CPU for a long time, thereby exhausting CPU resources. This might interfere with execution of other applications operating on the same home networking appliance, thereby causing the appliance not to work normally.

SUMMARY OF THE INVENTION

Therefore, a first object of the present invention is to provide a common key exchanging method and a communication device capable of achieving successful key exchange without causing the device to detect a timeout even if a device having incorporated therein a low-powered CPU is used. Also, a second object of the present invention is to provide a common key exchanging method and a communication device capable of normally performing a re-key process even if a device having incorporated therein a low-powered CPU is used. Furthermore, a third object of the present invention is to provide a common key exchanging method and a communication device capable of achieving successful key exchange without interfering with execution of other applications in a device having incorporated therein a low-powered CPU.

The present invention is directed to a common key exchanging method for exchanging a common key between two communication devices for transmission and reception of encrypted/authenticated data, and to a communication device for executing the method. For the purpose of attaining the above first object, the common key exchanging method of the present invention has a feature that each communication device performs steps as described below. Also, the communication device of the present invention has a feature of being structured so as to be capable of executing these steps.

At least one of the communication devices performs an information transmitting step of transmitting information required for another one of the communication devices to acquire the common key to the other one of the communication devices; a setting step of setting a waiting limit for a response from the other one of the communication devices based on a time required for a predetermined operation to be performed by the other one of the communication devices by a next response timing; an acquiring step of acquiring the common key from the information by performing the predetermined operation; and a response transmitting step of transmitting a predetermined response to the one of the communication devices in the next response timing. Alternatively, the communication device may include: an information transmitting section for performing the above information transmitting step; a setting section for performing the above setting step,; an acquiring section for performing the above acquiring step; and a response transmitting section for performing the above response transmitting section.

Here, each of the communication devices may calculate its own public value for transmission to the other and may calculate the common key based on the public value received from the other, thereby achieving an exchange of the common key. In this case, in the setting step, the waiting limit is set based on at least either one of a time required for calculation of the public value performed by the other one of the communication devices and a time required for calculation of the common key performed by the other one of the communication devices.

Also, the one of the communication devices may encrypt a common key generated by a unit included in the one of the communication devices or information for generating the common key and may transmit the encrypted common key or the encrypted information, and the other of the communication devices may decrypt the encrypted common key or the encrypted information to generate a common key and may transmit a response of acknowledging the common key to the one of the communication devices, thereby achieving an exchange of the common key. In this case, in the setting step, thewaiting limit is set based on a time required for decryption of the encrypted common key or a time required for decryption of the encrypted information and generation of the common key performed by the other one of the communication devices.

Furthermore, the one of the communication devices may encrypt a common key generated by a unit included in the one of the communication devices or information for generating the common key and may transmit the encrypted common key or the encrypted information, and the other of the communication devices may decrypt the encrypted common key or the encrypted information to generate a common key and may transmit a response of acknowledging the common key to the one of the communication devices, thereby achieving an exchange of the common key. In this case, in the setting step, the waiting limit is set based on a time required for decryption of the encrypted common key or the encrypted information and a time required for generation of the common key performed by the other one of the communication devices.

The predetermined operation may be either one of an operation for an authentication process associated with acquisition of the common key and an operation for acquisition of the common key and the authentication process accompanied thereby. Typically, the one of the communication devices transmits data with a digital signature for authentication to the other one of the communication devices, and the other one of the communication devices performs an identity authentication process based on the data with the digital signature received from the one of the communication devices, thereby achieving the authentication process. In this case, in the setting step, the waiting limit is set based on a time required for the identity authentication process performed by the other one of the communication devices.

The setting section of the one of the communication devices obtains a time to be taken for the predetermined operation based on a required operation time received from the other one of the communication devices by estimating a time taken for the predetermined operation. Preferably, the other one of the communication devices performs an estimating step of estimating a required operation time to be taken for the predetermined operation; a time transmitting step of transmitting the estimated required operation time to the one of the communication devices. Alternatively, the other one of the communication devices may include: an estimating section for performing the above estimating step; and a time transmitting section for performing the above time transmitting step. Furthermore, the one of the communication devices performs a receiving step of receiving the required operation time from the other one of the communication devices.

At this time, the one of the communication devices may perform a step of making an inquiry of the other one of the communication devices about the required operation time. Alternatively the one of the communication devices may include an inquiring section for performing the above inquiring step. In response to the inquiry from the one of the communication devices, the other one of the communication devices may perform the estimating step and the time transmitting step.

The other one of the communication devices may store in advance the required operation time. Also, the required operation time stored in advance is preferably a maximum time previously taken for the predetermined operation.

Alternatively, in another method, the other one of the communication devices may perform a step of transmitting at least once to the one of the communication devices a report that a response will be delayed by the next response timing. In this case, one of the communication devices may further perform a step of receiving the report from the other one of the communication devices and, in the setting step, may set a waiting limit for the response based on the report. Also, the one of the communication devices may measure a time starting at a time of transmitting a message and ending at a time of receiving a response after the predetermined operation from the other one of the communication devices, so as to obtain a time to be taken for the predetermined operation.

In a common key exchanging process where a communication device calculates a common key based on a public value of another communication device, the other one of the communication devices may calculate the public value and/or the common key by the next response timing (the other one of the communication devices may include a public value calculating section and a common key calculating section). In this case, it is preferable in the setting step that a waiting limit for a response with regard to completion of transmission of the public value or completion of calculation of the common key is set based on a total time to be taken for calculation of the public value and the common key performed by the other one of the communication devices.

Here, each communication device may further execute: a step of transmitting a completion report to the other after calculation of the common key has been completed; and a step of refraining from determining whether a key exchanging process has failed by the time a completion report is received from another one of the communication devices. Furthermore, in a message sequence in the IKE, the information transmitting step, the setting step, the acquiring step, and the response transmitting step may be performed

Furthermore, for the purpose of attaining the above second and third objects, the common key exchanging method of the present invention has a feature that each communication device performs steps described below. Also, the communication device of the present invention has a feature of being structured so as to be capable of executing these steps.

Each communication device performs: an estimating step of estimating a required operation time to be taken for a predetermined operation for calculation of a common key; and a calculating step of calculating a process start time for completing a process of exchanging the common key by a time when the process of exchanging the common key with each other should be completed. Alternatively, each communication device may include an estimating section for performing the above estimating step; and a calculating section for performing the above calculating section. Furthermore, either one of the communication devices further performs a start step of starting the key exchanging process at the time of the process start time. Alternatively, either one of the communication devices may further include a start section for performing the above start step.

In this case, another one of the communication devices further performs a time transmitting step of transmitting the required operation time estimated in the estimating step. Alternatively, the other one of the communication device may further include a time transmitting section for performing the above time transmitting step. Furthermore, the one of the communication devices may further perform a step of receiving the required operation time of the other one of the communication devices. Alternatively, the one of the communication devices may further include a receiving section for performing the above receiving step. In the calculating step, the one of the communication devices may calculate the process start time based on the required operation time of the one of the communication devices and that of the other one.

Still further, the one of the communication devices may further perform a step of making an inquiry of the other one of the communication devices about the required operation time. Alternatively, the one of the communication devices may further include an inquiring section for performing the above inquiring step. In response to the inquiry from the one of the communication devices, the other one of the communication devices may perform the estimating step and the time transmitting step.

Also, preferably, one of the communication devices whose process start time calculated in the calculating step comes earlier performs the start step at that process start time.

Still further, each communication device further performs a deciding step of deciding whether to generate a new common key or to update the common key. Alternatively, each communication device may include a deciding section for performing the above deciding step. When it is decided to update, it is preferable to divide the predetermined operation performed for calculation of the common key into predetermined small units for temporal load distribution. This load distribution is performed by one of the communication devices that takes a longer time to perform the predetermined operation for calculation of the common key.

Still further, in the estimating step, the required operation time of each communication device is estimated as being twice as long as an actual time to be taken for the predetermined operation performed by itself for calculation of the common key.

Preferably, the present common key exchanging method is provided in a form of a program for causing a series of procedures to be performed by communication devices. This program may be recorded on a computer-readable recording medium.

As described above, according to the common key exchanging method of the present invention, even if either one of the communication devices requires a time longer than a predetermined time for calculating a public value and a common key (low-powered), a time affected by operation delay or a delay report is estimated in advance for another one of the communication devices. With this, it is possible to avoid the conventional problem where, while a low-powered device is still performing operations for a key exchanging process, its counterpart device determines that no response comes from the low-powered device. Therefore, successful key exchange can be achieved. Furthermore, a key exchanging process at the time of updating the common key can be performed before the life of the common key expires. Still further, at the time of updating the common key, a heavy load of an operation can be distributed in time. Therefore, even in a low-powered device, a key exchanging process does not occupy the CPU for a long time.

These and other objects, features, aspects and advantages of the present invention will become more apparent from the following detailed description of the present invention when taken in conjunction with the accompanying drawings.

BRIEF DESCRIPTION OF THE DRAWINGS

FIGS. 1A and 1B are illustrations showing examples of a network configuration to which a common key exchanging method of the present invention is applied;

FIG. 2A is an illustration showing one example of functional blocks in a device employing the common key exchanging method of the present invention;

FIG. 2B is a block diagram illustrating one example of a detailed structure of a common key exchanging section illustrated in FIG. 2A;

FIG. 3 is a process sequence diagram for describing a common key exchanging method according to a first embodiment of the present invention;

FIG. 4 is a process sequence diagram for describing a common key exchanging method according to a second embodiment of the present invention;

FIG. 5 is a process sequence diagram for describing a common key exchanging method according to a third embodiment of the present invention;

FIG. 6 is a process sequence diagram for describing a common key exchanging method according to a fourth embodiment of the present invention;

FIG. 7 is a process sequence diagram for describing a common key exchanging method according to a fifth embodiment of the present invention;

FIGS. 8A and 8B are process sequence diagrams for describing a common key exchanging method according to a sixth embodiment of the present invention;

FIGS. 9A and 9B are process sequence diagrams for describing a common key exchanging method according to a seventh embodiment of the present invention;

FIGS. 10A and 10B are process sequence diagrams for describing a common key exchanging method according to an eighth embodiment of the present invention;

FIG. 11 is a process sequence diagram for describing a common key exchanging method according to a ninth embodiment of the present invention;

FIG. 12 is an illustration showing a time chart of a key updating process (re-key process) according to tenth and eleventh embodiments of the present invention;

FIG. 13 is a process sequence diagram for describing a common key exchanging method according to a tenth embodiment of the present invention;

FIG. 14 is a process sequence diagram for describing a common key exchanging method according to an eleventh embodiment of the present invention;

FIG. 15 is a process sequence diagram for describing a common key exchanging method according to a twelfth embodiment of the present invention;

FIGS. 16 and 17 are process sequence diagrams in a case where any one of the common key exchanging methods of the present invention is applied to a type of communications other than key exchange;

FIG. 18 is a process sequence diagram for describing a conventional basic common key exchanging method (DH method);

FIG. 19 is a sequence diagram showing an overview of a procedure of the IKE disclosed in RFC2407 through 2409; and

FIG. 20 is an illustration for describing a problem in a conventional common key exchanging method.

DESCRIPTION OF THE PREFERRED EMBODIMENTS

Prior to descriptions of a common key exchanging method provided by the present invention, a network configuration with devices using this method is first described below.

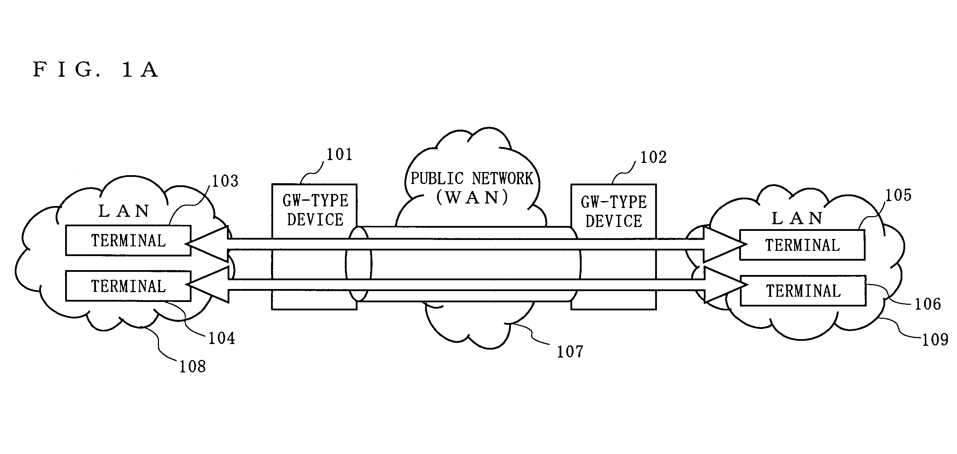

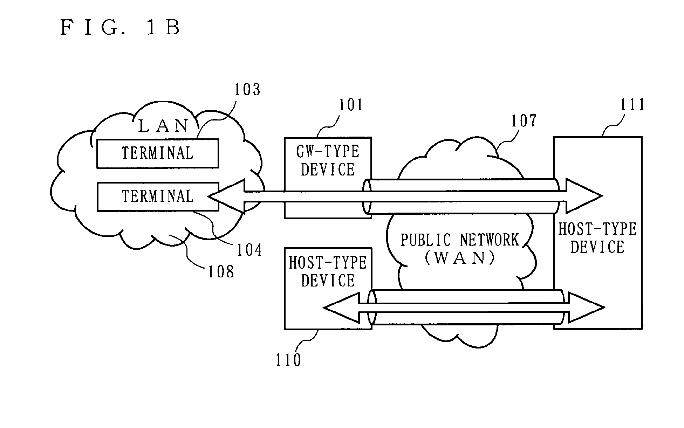

FIGS. 1A and 1B are illustrations showing examples of the network configuration to which the common key exchanging method of the present invention is applied. Examples of implementation suitable for the common key exchanging method of the present invention are classified into two types. One is that the method is implemented in gateway-type (GW-type) devices (routers, gateways (GW), etc.) relaying between a home networking appliance and a public network (WAN), such as the Internet (FIG. 1A). The other is that the method is implemented in home networking appliances serving as host-type devices (FIG. 1B).

First, in FIG. 1A, the common key exchanging method of the present invention is implemented in GW-type devices 101 and 102. These GW-type devices 101 and 102 are connected to each other via a public network 107. Also, the GW-type device 101 is connected within its LAN 108 to terminals 103 and 104. Similarly, the GW-type device 102 is connected within its LAN 109 to terminals 105 and 106.

The terminals within the LAN 108 and those within the LAN 109 are communicable via the GW-type devices 101 and 102. Encryption/authentication is performed on data exchanged between these GW-type devices 101 and 102. That is, encryption/authentication is ended at these GW-type devices 101 and 102. The GW-type device 101 encrypts/authenticates data received from any terminal within the LAN 108 for transmission to the counterpart GW-type device 102, and decrypts/authenticates encrypted/authenticated data received from the GW-type device 102 for output to any terminal within the LAN 108. The GW-type device 102 encrypts/authenticates data received from any terminal within the LAN 109 for transmission to the counterpart GW-type device 101, and decrypts/authenticates encrypted/authenticated data received from the GW-type device 101 for output to any terminal within the LAN 109. Furthermore, a process of exchanging a common key is also performed between the GW-type devices 101 and 102.

On the other hand, in FIG. 1B, the common key exchanging method of the present invention is implemented in host-type devices 110 and 111. The host-type device 111 is connected to the GW-type device 101 or the host-type device 110 via the public network 107. Also, as described above, the GW-type device 101 is connected to the terminals 103 and 104 within the LAN 108.

The host-type device 111 and the terminals within the LAN 108 are communicable via the GW-type device 101. Encryption/authentication is performed on data exchanged between the host-type device 111 and the GW-type device 101. Unlike the GW-type device 101, the host-type device 111 encrypts/authenticates data that has been received by or is to be transmitted from itself. Furthermore, the host-type device 111 can exchange encrypted/authenticated data with the host-type device 110 having similar capabilities. Still further, a process of exchanging a common key is performed between the host-type device 111 and the GW-type device 101 and between the host-type device 111 and the host-type device 110 separately.

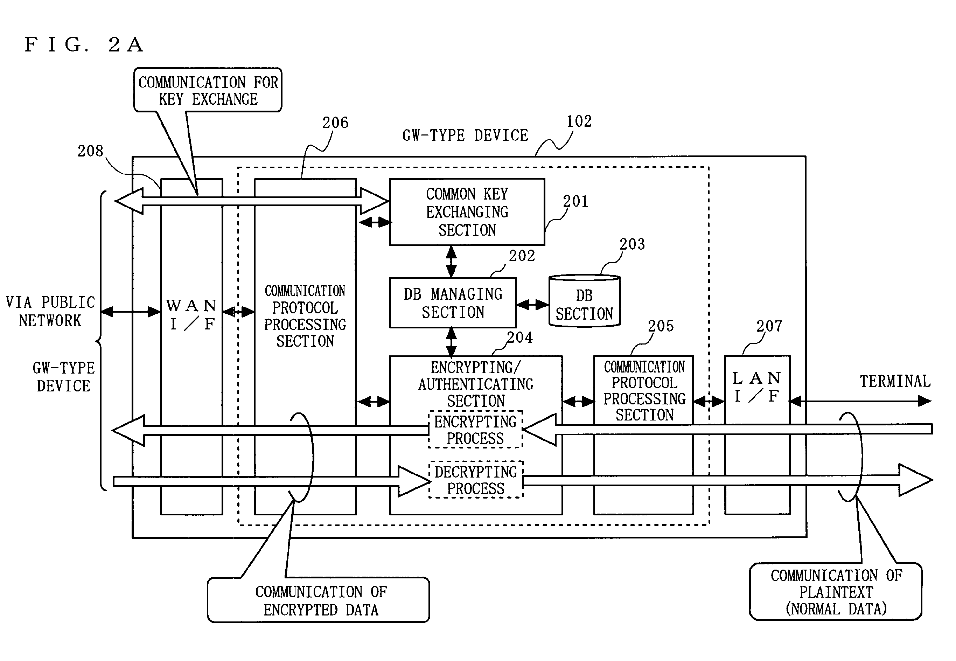

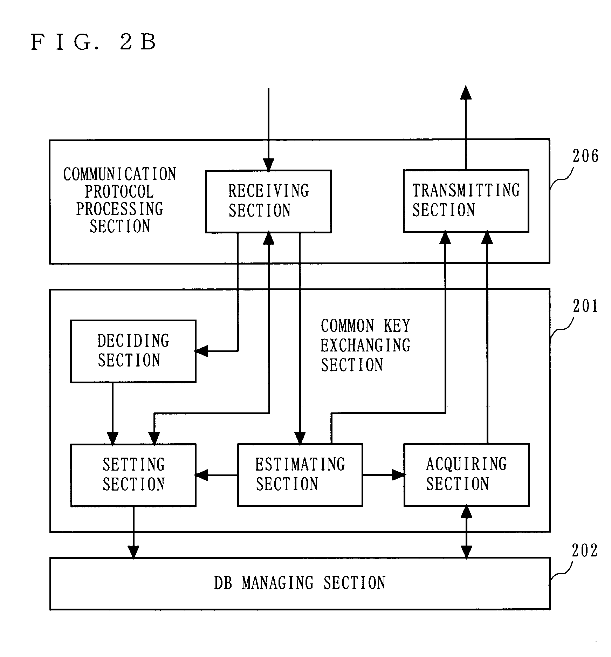

With reference to FIGS. 2A and 2B, functional blocks of the device having implemented therein the common key exchanging method of the present invention are described below. FIG. 2A is an example of functional blocks of the GW-type device 102 shown in FIG. 1A. In FIG. 2A, the GW-type device 102 includes a common key exchanging section 201, a database (DB) managing section 202, a database (DB) section 203, an encrypting/authenticating section 204, communication protocol processing sections 205 and 206, a LAN interface (I/F) 207, and a WAN interface (I/F) 208. FIG. 2B is a block diagram illustrating the common key exchanging section 201 of FIG. 2A. Note that FIG. 2B illustrates functional blocks representing all processes to be described in the embodiments. Therefore, functional blocks included in the device A and the device B and a data flow to be described in the embodiments are different from each other based on the processes to be performed in each embodiment. A setting section mainly performs various setting processes, such as setting a required operation time and processing small process units. An estimating section mainly performs a process of estimating the required operation time. An acquiring section mainly performs a process of acquiring public values, a common key, or a public key through an operation or decoding. A deciding section performs a process of deciding whether to newly generate a key or to update the existing key with regard to a common key exchanging process. These processes are described further below in detail.

The GW-type device 102 is connected to a public network (WAN) via the WAN interface 208 for communication with other GW-type devices, etc. Also, the GW-type device 102 is connected to a LAN via the LAN interface 207 for communication with terminals, etc., within the LAN. The communication protocol processing sections 205 and 206 are sections for processing a communication protocol of an IP layer or TCP layer, as well as performing a process of routing of a packet transmitted and received between a terminal within the LAN and a device via the public network.

The common key exchanging section 201 is a section for performing a process based on the common key exchanging method of the present invention. The common key exchanging section 201 performs communications for key exchange with the counterpart GW-type device 101, thereby sharing a session common key with the GW-type device 101. The session common key is recorded in the database section 203 via the database managing section 202.

The database section 203 is a recording section for storing the session common keyforuse in encryption/authentication, as well as an encryption algorithm and other information. Registering information in the database section 203 or deleting information therefrom is performed by the database managing section 202. The encrypting/authenticating section 204 refers to the information about the key in the database section 203 to perform encryption, decryption, and authentication (integrity check) of a packet. Specifically, the encrypting/authenticating section 204 receives an unencrypted transmission packet via the LAN interface 207 and the communication protocol processing section 205. Upon reception of this transmission packet, the encrypting/authenticating section 204 performs data encryption, adds data for authentication, etc., and then sends the resultant data via the communication protocol processing section 206 and the WAN interface 208 to the public network. Therefore, the packet transmitted from the encrypting/authenticating section 204 via the communication protocol processing section 206 and the WAN interface 208 has been encrypted. As for an encrypted packet received from the public network, the procedure is carried out in reverse to the above. That is, the encrypted data is decrypted by the encrypting/authenticating section 204, and plaintext data is then sent to a terminal within the LAN.

Embodiments of the common key exchanging method provided by the present invention when applied to, by way of example only, the key exchanging process in the DH method are described below. Note that a device A and a device B in each embodiment form a pair which performs an encrypting/authenticating process and a common key exchanging process. Specifically, these devices correspond to any one of the pair of the GW-type devices 101 and 102 in FIG. 1A, the pair of the GW-type device 101 and the host-type device 111, and the pair of the host-type devices 110 and 111 in FIG. 1B. The processes performed by the devices and shown in process sequences in each embodiment are performed by the common key exchanging section 201 in FIG. 2A.

(First embodiment)

Methods according to first through ninth embodiments described below are those for solving the first problem of the conventional common key exchanging method described in the Background Art section. In the methods of these embodiments, for the purpose of solving the first problem, a control of extending a response waiting limit (timeout time) for a time-consuming operation is performed. In the present invention, an optimum controlling process can be implemented in accordance with the procedure of the key exchanging process. In the first through ninth embodiments, nine typical controlling processes are described.

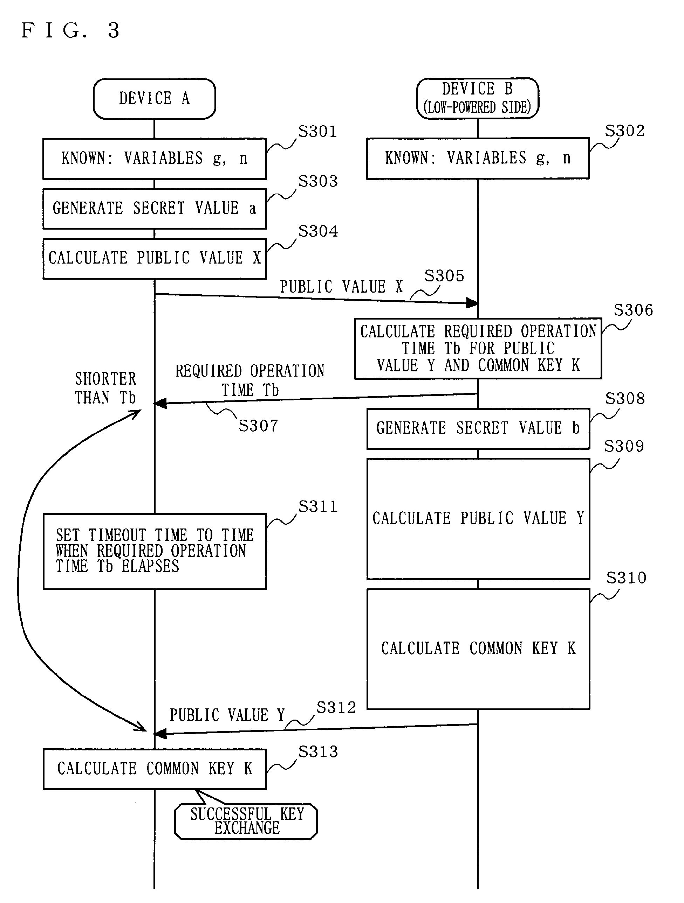

FIG. 3 is a process sequence diagram for describing the common key exchanging method according to the first embodiment of the present invention. In FIG. 3, it is assumed that the processing capability of the device B is lower than that of the device A (for example, the device B has incorporated therein a low-powered CPU). Also, it is assumed that the device A (initiator) starts performing a key exchanging process to achieve key sharing with the device B (responder). Furthermore, it is assumed that, before performing the key exchanging process, variables $g$ and $n$ for use in an operation of the key exchanging process are known in advance to the device A and the device B (steps S301 and S302).

Upon start of the key exchanging process, the device A first generates its unique secret value $a$ (step S303). The device A then uses this secret value $a$ and the variables $g$ and $n$ to calculate the public value X by using the above Equation (1) (step S304). The device A then transmits the calculated public value X to the device B (step S305). The processes so far are similar to the conventional processes (steps S1803 through S1805 in FIG. 18). These processes are performed by the acquiring section and the transmitting section included in the device A (refer to FIG. 2B).

Upon receipt of the public value X from the device A, the device B estimates a time Tb1 to be taken to calculate the public value Y by using the above Equation (2) (the time Tb1 also includes a time to be taken to generate the secret value b) and a time Tb2 to be taken to calculate the common key K by using the above Equation (3) to find a required operation time Tb (= Tb1 + Tb2) required by the device B for the key exchanging process (step S306). Theses processes are performed by the receiving section and the estimating section in the device B (refer to FIG. 2B). This required operation time Tb represents a delay in transmission of the public value to inform the device A that the low-powered device B requires a time more than a predetermined time to calculate the public value and the common key. The required operation time Tb is calculated as follows, for example. The device B experimentally calculates in advance the public value Y and the common key K by using the known variables $g$ and $n$, and then stores a time Time[$g,n$] required to calculate them. Then, as in Equation (6) shown below, Time[$g,n$] is added with a fixed value $\alpha$ to obtain the required operation time Tb. The fixed value $\alpha$ is a value defined by considering a delay time and fluctuations in message transmission/reception between the device A and the device B (the same goes for the other embodiments).

$$Tb = \text{Time}[g,n] + \alpha \tag{6}$$

The device B transmits the required operation time Tb to the device A to inform that the device B will return the public value Y by the time when this required operation time Tb elapses (step S307) . After this transmission, the device B generates its unique secret value $b$ (step S308). The device B then uses this secret value $b$ and the variables $g$ and $n$ to calculate the public value Y by using the above Equation (2) (step S309). Also, the device B calculates the common key K with the public value X by using the above Equation (3) (step S310). The device B then transmits the calculated public value Y to the device A (step S312). These processes are performed by the acquiring section and the transmitting section included in the device B (refer to FIG. 2B).

Upon receipt of the required operation time Tb (step S307), the device A extends a waiting limit (timeout time) for a response from the device B to a time when the required operation time Tb elapses from the above reception (step S311). That is, the device A waits until the required operation time Tb at maximum and, if not receiving the public value Y from the device B by that time, then determines that the public value Y cannot be received from the device B. When receiving the public value Y from the device B by the timeout time (step S312), the device A determines that a response of the public value in the DH method has been received. Therefore, the device A can also correctly calculate the common key K with the secret $a$, the variable $n$, and the public value Y by using the above Equation (4) (step S313). With this, successful key exchange can be achieved at both of the device A and the device B. These processes are performed by the setting section and acquiring section included in the device A (refer to FIG. 2B).

As described above, according to the common key exchanging method of the first embodiment of the present invention, the low-powered device estimates in advance a required operation time for a key exchanging process and then informs the counterpart device of a maximum delay time of a response message. In accordance with the received required operation time, the counterpart device extends the timeout time for determining the presence or absence of a response message. With this, it is possible to avoid the conventional problem that, while a low-powered device is still performing operations for key exchange, its counterpart device determines that no response comes from the low-powered device. Therefore, successful key exchange can be achieved.

(Second embodiment)

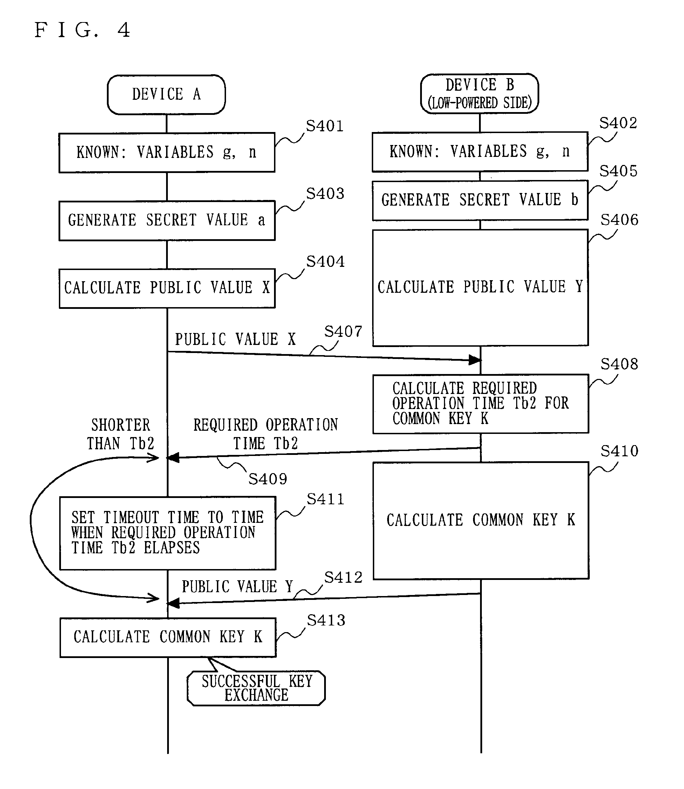

FIG. 4 is a process sequence diagram for describing a common key exchanging method according to the second embodiment of the present invention. In FIG. 4, the relationship between the device A and the device B is similar to that in the above first embodiment. Also, the processes in steps S401 through S404 and S407 in FIG. 4 are similar to steps S301 through S305 in FIG. 3, respectively.

In the second embodiment, before receiving the public value X from the device A, the device B generates the secret value $b$ (step S405) and then calculates the public value Y by using the above Equation (2) (step S406). Upon receipt of the public value X from the device A (step S407), the device B estimates a time Tb2 to be taken to calculate the common key K by using the above Equation (3), and then finds a required operation time Tb (= Tb2) required by the device B for the key exchanging process (step S408). The required operation time Tb2 can be calculated by, for example, using the above Equation (6). The device B then transmits the calculated required operation time Tb2 to the device A to inform that the device B will return the public value Y by the time when this required operation time Tb elapses (step S409). After this transmission, the device B calculates the common key K by using the Equation (3) (step S410), and then transmits the calculated public value Y to the device A (step S412).

Upon receipt of the required operation time Tb2 from the device B (step S409), the device A extends a waiting limit (timeout time) for a response from the device B to a time when the required operation time Tb2 elapses from the above reception (step S411). When receiving the public value Y from the device B by the timeout time (step S412), the device A determines that a response of the public value in the DH method has been received. Therefore, the device A can also correctly calculate the common key K (step S413). With this, successful key exchange can be achieved at both of the device A and the device B.

As described above, according to the common key exchanging method of the second embodiment of the present invention, if the low-powered device is capable of completing calculation of its public value before receiving the counterpart device's public value, the low-powered device estimates in advance a required operation time merely in consideration of a time required for calculation of the common key. With this, as with the above first embodiment, successful key exchange can be achieved.

(Third embodiment)

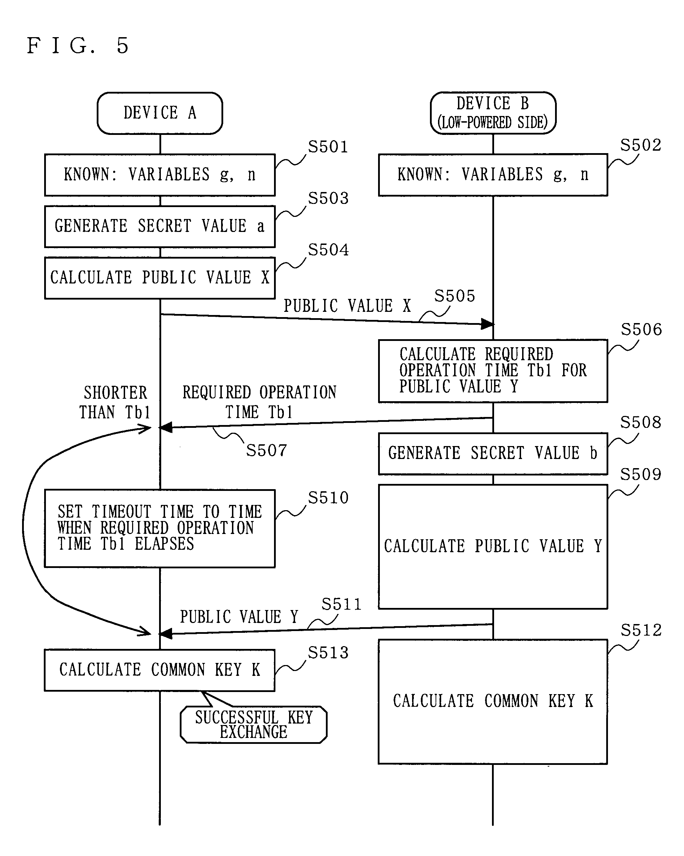

FIG. 5 is a process sequence diagram for describing a common key exchanging method of the third embodiment of the present invention. In FIG. 5, the relationship between the device A and the device B is similar to that in the above first embodiment. Also, the processes in steps S501 through S505 in FIG. 5 are similar to steps S301 through S305 in FIG. 3, respectively.

Upon receipt of the public value X from the device A (step S505), the device B estimates a time Tb1 to be taken to calculate the public value Y by using the above Equation (2) to find a required operation time Tb (= Tb1) required for a key exchanging process by the device B (step S506). The required operation time Tb1 can be calculated by, for example, using the above Equation (6). The device B then transmits the required operation time Tb1 to the device A to inform that the device B will return the public value Y by the time when this required operation time Tb1 elapses (step S507). After this transmission, the device B generates its unique secret value $b$ (step S508), calculates the public value Y by using the above Equation (2) (step S509), and then transmits the calculated public value Y to the device A (step S511). After transmission of the public value Y, the device B calculates the common key K by using the above Equation (3) (step S512).

Upon receipt of the required operation time Tb1 from the device B (step S507), the device A extends a waiting limit (timeout time) for a response from the device B to a time when the required operation time Tb1 elapses from the above reception (step S510). Upon receipt of the public value Y by the timeout time from the device B (step S511), the device A determines that a response of the public value in the DH method has been received. Therefore, the device A can also correctly calculate the common key K (step S513). With this, successful key exchange can be achieved at both of the device A and the device B.

As described above, according to the common key exchanging method of the third embodiment of the present invention, when the low-powered device transmits the public value to the counterpart device immediately after calculation, the low-powered device estimates in advance a required operation time merely in consideration of a time required for calculating the public value. With this, as with the first embodiment, successful key exchange can be achieved.

(Fourth embodiment)

In the above first through third embodiments, the basic procedure in which the public value X is first transmitted from the device A to the device B and then the required operation time Tb is transmitted from the device B to the device A has been described. However, similar effects can also be achieved even in an applied procedure in which the required operation time Tb is first transmitted and then the public value X. Hereinafter, embodiments are described in which the basic procedure described in the above first embodiment is replaced by this applied procedure.

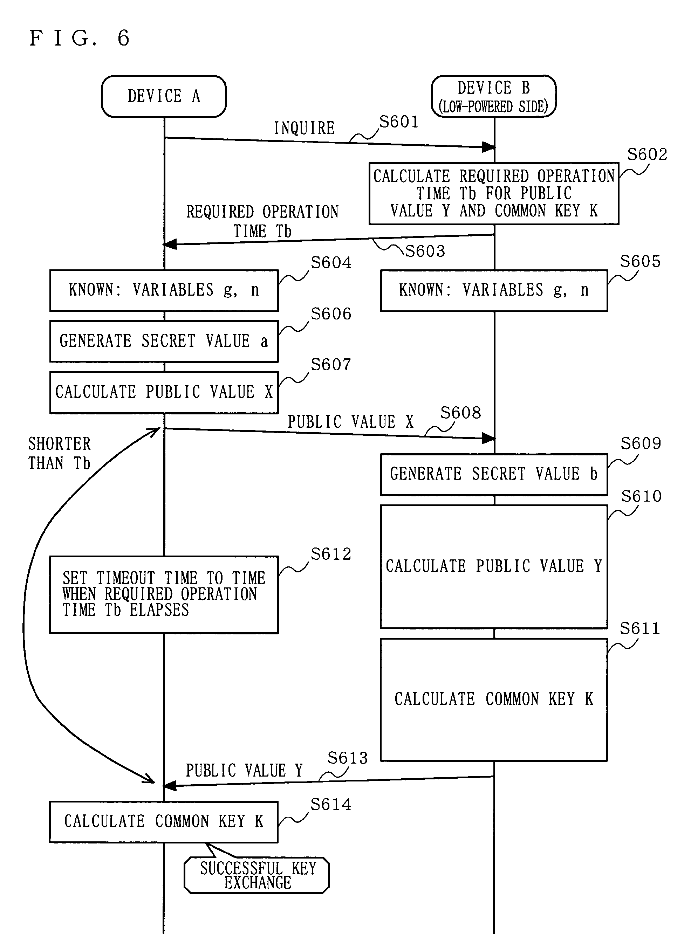

FIG. 6 is a process sequence diagram for describing a common key exchanging method according to the fourth embodiment of the present invention. In FIG. 6, the relationship between the device A and the device B is similar to that in the above first embodiment.

Upon start of a key exchanging process, the device A first inquires of the device B about the required operation time (step S601). Upon receipt of the inquiry from the device A, the device B estimates a time Tb1 to be taken to calculate the public value Y and a time Tb2 to be taken to calculate the common key K to find a required operation time Tb (= Tb1 + Tb2) required by the device B for the key exchanging process (step S602). The device B then transmits the required operation time Tb to the device A to inform that the device B will return the public value Y by the time when this required operation time Tb elapses (step S603).

Upon receipt of the required operation time Tb from the device B, the device A generates its secret value $a$, calculates the public value X by using the above Equation (1), and then transmits the calculated public value X to the device B (steps S606 through S608). Upon receipt of the public value X from the device A, the device B generates its secret value $b$, calculates the public value Y and the common key K by using the above Equations (2) and (3), and then transmits the calculated public value Y to the device A (steps S609 through S611 and step S613). Upon receipt of the required operation time Tb from the device B (step S603), the device A extends a waiting limit (timeout time) for a response from the device B to a time when the required operation time Tb elapses from the transmission of the public value X (step S612). Then, upon receipt of the public value Y from the device B by the timeout time (step S613), the device A determines that a response of the public value in the DH method has been received.

In the fourth embodiment, the case where the basic procedure described in the above first embodiment is replaced by the applied procedure has been described. Similarly, in the second and third embodiments, it is possible to replace the basic procedure by the applied procedure. That is, steps S609 and S610 can be performed before step S608 . Also, step S611 can be performed after step S613. Furthermore, in the fourth embodiment, the procedure of informing the device A of only the required operation time of the device B has been described. Alternatively, the device A can also estimate its required operation time, and the device A and the device B can mutually inform each other about their required operation times.

(Fifth embodiment)

In the above first through fourth embodiments, the variables $g$ and $n$ are known between the device A and the device B. However, there may be a case of negotiating the variables $g$ and $n$ before the key exchanging process. In this case, if such a procedure as in the above fourth embodiment is taken in which an inquiry of the required operation time is first conducted, a different scheme of estimating the required operation time has to be taken. In view of this, in the fifth embodiment, a case where variables $g$ and $n$ are unknown and the procedure in which an inquiry of the required operation time is first conducted is described below.

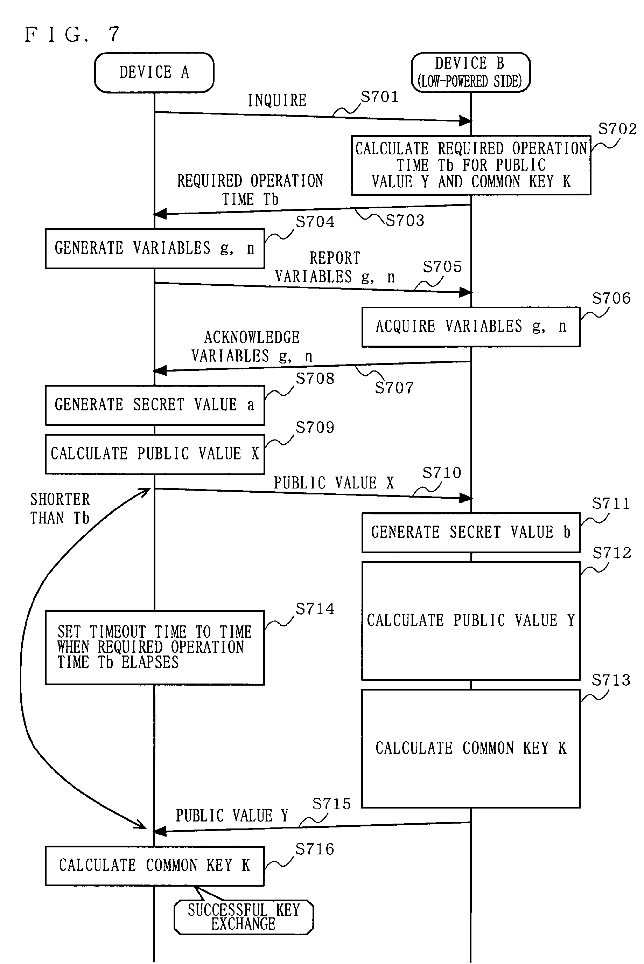

FIG. 7 is a process sequence diagram for describing a common key exchanging method according to the fifth embodiment of the present invention. In FIG. 7, the relationship between the device A and the device B is similar to that in the above fourth embodiment, except that the variables $g$ and $n$ are unknown.

Upon start of a key exchanging process, the device A first inquires of the device B about the required operation time (step S701). Upon receipt of the inquiry from the device A, the device B estimates a time Tb1 to be taken to calculate the public value Y and a time Tb2 to be taken to calculate the common key K to find the required operation time Tb (= Tb1 + Tb2) required by the device B for the key exchanging process (step S702). This required operation time Tb is calculated as follows, for example. The device B experimentally performs an operation in advance a plurality of times by using a variety of combinations of possible values of the variables $g$ and $n$, and then stores a maximum time Time_max_all required for the operation. Then, as in Equation (7) shown below, this maximum time is added with the fixed value $\alpha$ to obtain the required operation time Tb.

$$Tb = Time\_max\_all + \alpha \qquad (7)$$

The device B then transmits the required operation time Tb to the device A to inform that the device B will return the public value Y by the time when this required operation time Tb elapses (step S703). Upon receipt of the required operation time Tb from the device B, the device A generates the variables $g$ and $n$ and informs the device B of these variables (steps S704 and S705). The device B receives these variables $g$ and $n$ and then returns a response of acknowledgement (step S706 and S707). The processes after the device A receives the response of acknowledgement of the variables $g$ and $n$ (steps S709 through S716) are similar to the above-described steps S607 through S614 in FIG. 6.

As described above, according to the common key exchanging method of the fifth embodiment of the present invention, even in the case of negotiating the variables $g$ and $n$ after the inquiry of the required operation time, successful key exchange can be achieved by reliably estimating a maximum required operation time.

In the fifth embodiment, the case where the variables $g$ and $n$ are negotiated in the applied procedure described in the above fourth embodiment (FIG. 6) has been described. Also, the key exchanging method according to the fifth embodiment can be applied to the applied procedure by which the basic procedure in the above second and third embodiments is replaced. Furthermore, the process of receiving the required operation time (steps S701 through S703) may be performed after the process of receiving the variables g and n (steps S704 through S707). Still further, the device A may inform the device B of the variables $g$ and $n$ together with the public value X in step S710.

(Sixth embodiment)

In the above second embodiment (FIG. 4), the procedure in which calculation by the device A of the public value X and calculation by the device B of the public value Y are performed in parallel. In such a parallel procedure, however, the low-powered device B might not complete calculation of the public value Y by the time of receiving the public value X. This is a case, for example, in which the variables $g$ and $n$ are negotiated before a key exchanging process, as described in the above fifth embodiment. In the sixth embodiment, described is a common key exchanging method using a procedure in which the variables $g$ and $n$ are unknown, the public values X and Y are calculated in parallel, and an inquiry of the required operation time is first conducted.

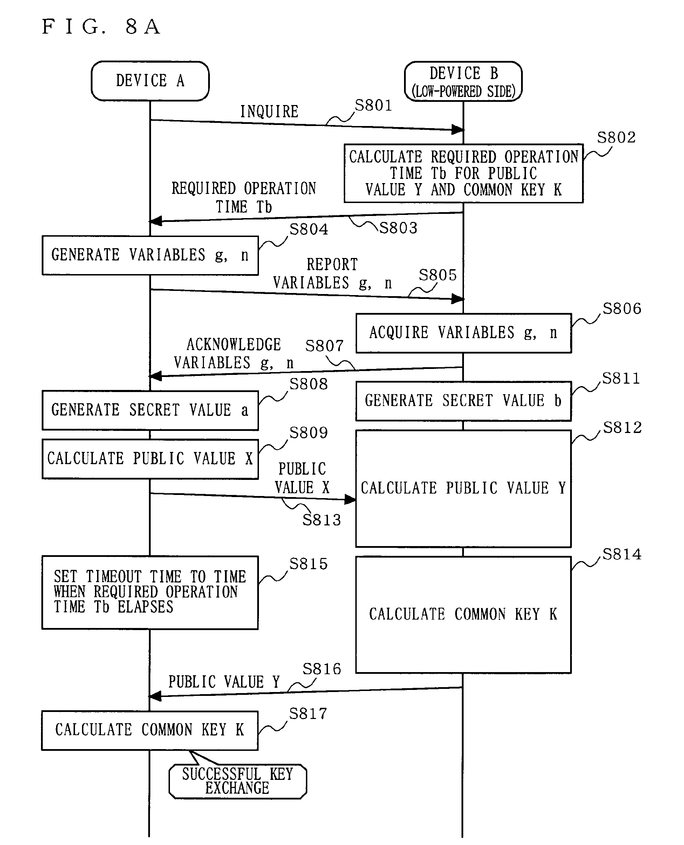

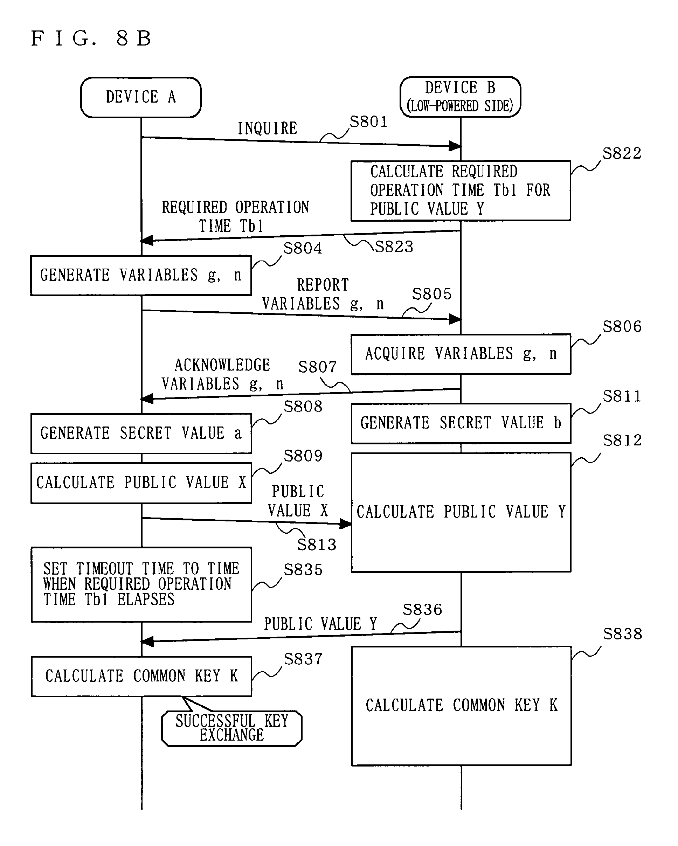

FIGS. 8A and 8B are process sequence diagrams for describing the common key exchanging method according to the sixth embodiment of the present invention. In FIGS. 8A and 8B, the relationship between the device A and the device B is similar to that in the above second embodiment, except that the variables $g$ and $n$ are unknown.

In FIG. 8A, upon start of a key exchanging process, the device A first inquires of the device B about the required operation time (step S801). Upon receipt of the inquiry from the device A, the device B estimates a time Tb1 to be taken to calculate the public value Y and a time Tb2 to be taken to calculate the common key K to find the required operation time Tb (= Tb1 + Tb2) required by the device B for the key exchanging process (step S802) . This required operation time Tb is calculated as follows, for example. The device B experimentally performs an operation in advance a plurality of times by using a variety of combinations of possible values of the variables $n$ and $g$, and then stores a maximum time Time_maxY_all required for calculation of the public value Y and a maximum time Time_maxK_all required for calculation of the common key K. Then, as in Equations (8-1) and (9-1) shown below, these maximum times are added with the fixed value $\alpha$ predetermined in advance to obtain the required operation times Tb1 and Tb2, thereby obtaining a required operation time Tb.

$$Tb1 = Time\_maxY\_all + a \qquad (8\text{-}1)$$

$$Tb2 = Time\_maxK\_all + a \qquad (9\text{-}1)$$

The device B transmits the required operation time Tb to the device A to inform that the device B will return the public value Y by the time when the required operation time Tb elapses (step S803). Upon receipt of the required operation time Tb from the device B, the device A generates the variables *g* and *n* and informs the device B of these variables (steps S804 and S805). In response, the device B receives the variables g and n from the device A and then returns a response of acknowledgement (step S806 and S807). The device B then generates a secret value b to calculate the public value Y by using the above Equation (2) (steps S811 and S812).

Upon receipt of the response of acknowledgment of the variables *g* and *n* from the device B, the device A generates the secret value a to calculate a public value X by using the above Equation (1) (steps S808 and S809). The device A then transmits the calculated public value X to the device B (step S813). Upon receipt of the public value X, the device B calculates the common key K and then transmits the public value Y to the device A (steps S814 and S816).

Upon transmission of the public value X to the device B (step S813), the device A extends a waiting limit (timeout time) for a response from the device B to a time when the required operation time Tb elapses from the transmission of the public value X (step S815). Then, upon receipt of the public value Y from the device B by the timeout time (step S816), the device A determines that a response of the public value in the DH method has been received. Therefore, the common key K can be correctly calculated also by the device A (step S817). With this, successful key exchange can be achieved at both of the device A and the device B.

As described above, according to the common key exchanging method of the sixth embodiment of the present invention, successful key exchange can be ensured even when calculation of the public value X by the device A and calculation of the public value Y by the device B are performed in parallel.

The method according to the sixth embodiment can be applied to any procedure in which calculation of the public value X by the device A and calculation of the public value Y by the device B are performed in parallel. Therefore, in FIG. 8A, step S814 can be performed subsequently to step S816. Also, the process of obtaining the required operation time (steps S801 through S803) can be performed subsequently to the process of acquiring the variables *g* and *n* (steps S804 through S807).

Also, as illustrated in FIG. 8B, the process of transmitting the public value Y (step S836) can be performed before the process of calculating the common key K (step S838). In this case, the device B estimates only the required operation time Tb1 for calculation of the public value Y, and then transmits the estimated required operation time Tb1 to the device A (steps S822 and S823). Then, after transmitting the public value X, the device A extends a waiting limit (timeout time) for a response from the device B to a time when the required operation time Tb1 elapses from the transmission of the public value X (step S835). With this process, the device A can receive the public value Y from the device B without the occurrence of a timeout (step S836).

(Seventh embodiment)

The current IKE neither define whether the device B has completed the process of calculation of the common key K when reporting the public value Y to the device A, or define that the device A is provided with a timeout time for waiting the device B to complete the process of calculating the common key K. However, as in the above third embodiment (FIG. 5), when the low-powered device B takes time to generate the common key K after transmitting the public value Y, the following problems may occur. For example, when the device A encrypts data with the common key K and then transmits the encrypted data to the device B before the device B has not yet completed calculation of the common key K, the device B may discard the received encrypted data. Also, in a case where the device A transmits a message to the device B after calculating the common key K and then waits for a response using the common key K from the device B, if calculation of the common key K at the device B is delayed, a timeout occurs at the device A with regard to a response. In order to get around these problems, a common key exchanging method according to the seventh embodiment which will be described below, a timeout time is provided until the device B generates the common key K after transmitting the public value Y.

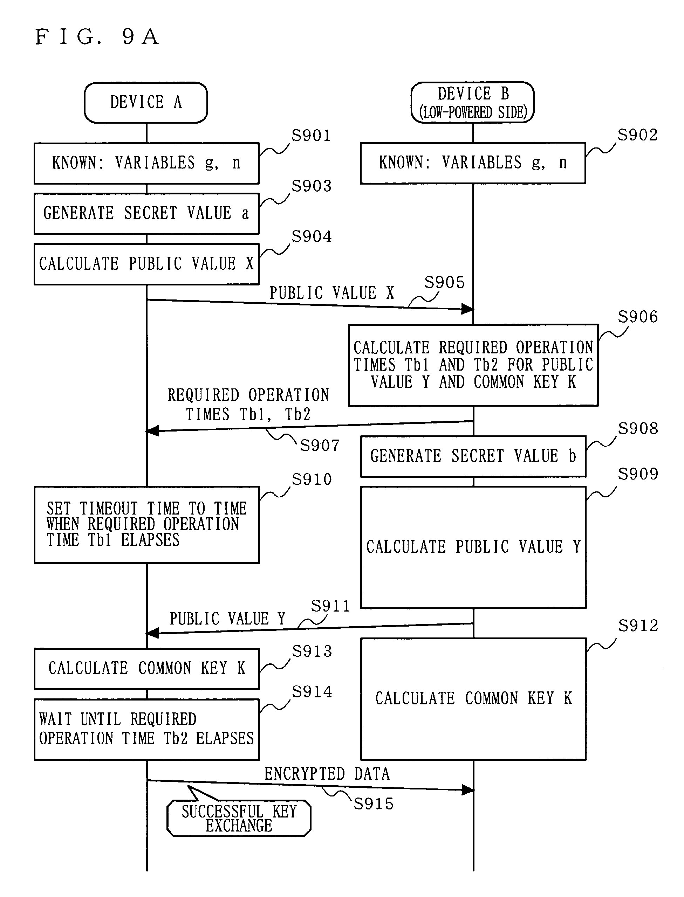

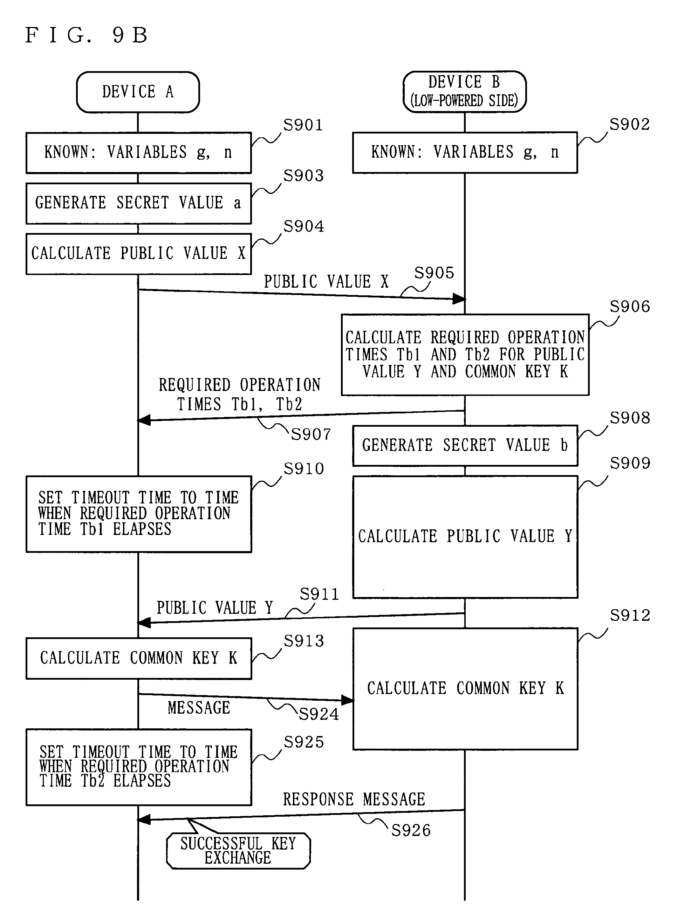

FIGS. 9A and 9B are process sequence diagrams for describing the common key exchanging method according to the seventh embodiment of the present invention. In FIGS. 9A and 9B, the relationship between the device A and the device B is similar to that in the above first embodiment. Furthermore, processes in steps S901 through S905 in FIGS. 9A and 9B are similar to those in steps S301 through S305 in FIG. 3.

Upon receipt of the public value X from the device A (step S905), the device B estimates a time Tb1 to be taken for calculation of the public value Y and a time Tb2 to be taken calculation of the common key K, and then finds required operation times Tb1 and Tb2 required for a key exchanging process at the device B (step S906). These required operation times Tb1 and Tb2 are calculated in accordance with the following Equation (8-2) and Equation (9-2) which uses a trial public value Y and a trial common key K calculated in advance by using the known variables *g* and *n*.

$$Tb1 = Time\_maxY[g,n] + \alpha \qquad\qquad (8\text{-}2)$$

$$Tb2 = Time\_maxK[g,n] + \alpha \qquad\qquad (9\text{-}2)$$

The device B then transmits the calculated required operation times Tb1 and Tb2 to the device A, and notifies that the public value Y will be sent as a response by the time the required operation time Tb1 elapses and calculation of the common key K will be completed by the time the required operation time Tb2 elapses from that response (step S907). The device B then generates the secret value *b*, calculates the public value Y by using the above Equation (2), and then transmits the calculated public value Y to the device A (steps S908, S909, and S911). The device B then calculates the common key K after transmitting the public value Y (step S912).

Upon receipt of the required operation times Tb1 and Tb2 from the device B (step S907), the device A extends a waiting limit (timeout time) for a response from the device B to a time when the required operation time Tb1 elapses from this reception (step S910). Then, upon receipt of the public value Y from the device B by the timeout time (step S911), the device A determines that a response of the public value in the DH method has been received, and then generates its common key K (step S913).

The process sequence exemplarily shown in FIG. 9A is to solve the problem of the possibility of discarding the encrypted data. In this process sequence, after generating the common key K, the device A waits until the required operation time Tb2 elapses from the time of receiving the public value Y, and then transmits the encrypted data to the device B (steps S914 and S915). These processes can prevent the encrypted data from being discarded by the device B.

The process sequence exemplarily shown in FIG. 9B is to solve the problem of occurrence of a timeout at the device A with regard to a response. In this process sequence, after generating the common key K and then transmitting a message, the device A extends a waiting limit (timeout time) for a response from the device B to a time when the required operation time Tb2 elapses from the message transmission (steps S924 and S925). With these processes, the device A can receive a response message from the device B (step S926).

As described above, according to the common key exchanging method of the seventh embodiment of the present invention, a key exchanging process can be successfully carried out even when the device B calculates the common key K after transmitting the public value Y.

This procedure according to the seventh embodiment can be applied to any procedure as long as the low-powered device B calculates the common key K after transmitting the public value Y. Therefore, steps S906 and S907 in FIGS. 9A and 9B can be performed before step S901. Furthermore, steps S908 and S909 can be performed before step S905.

(Eighth embodiment)

In the above first through seventh embodiments, the case where the device B (responder) is a low-powered device has been described. In the eighth embodiment, a common key exchanging method is described in a case where the device A (initiator) which starts a key exchanging process is a low-powered device.

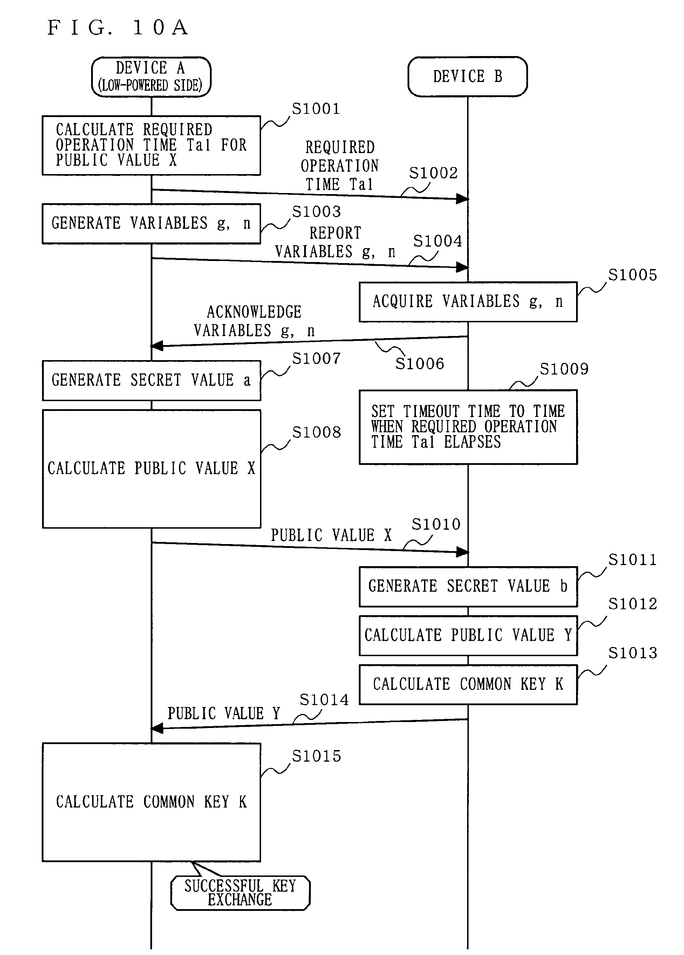

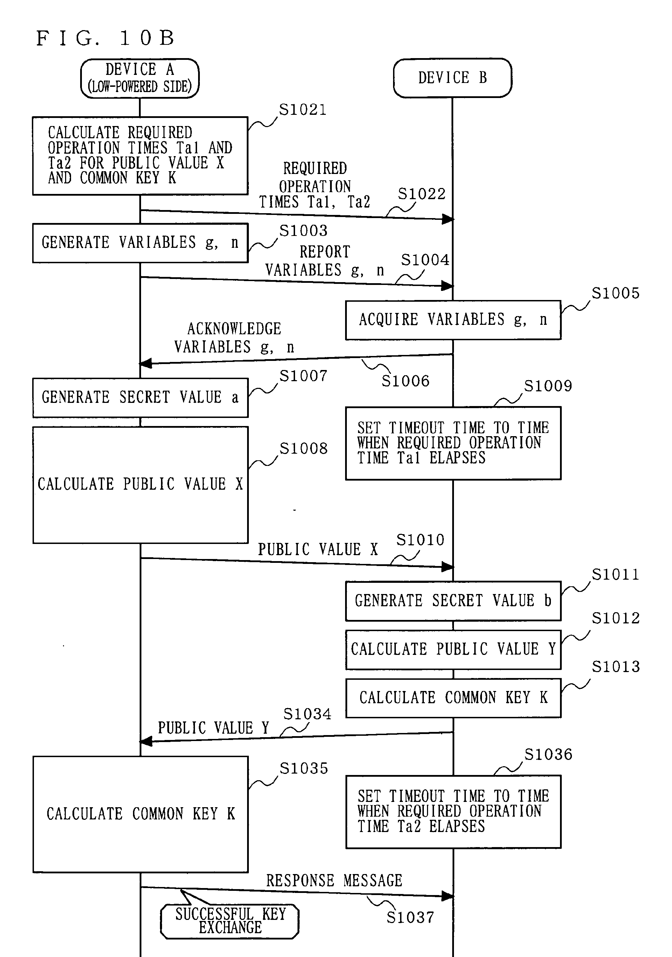

FIGS. 10A and 10B are process sequence diagrams for describing the common key exchanging process according to the eighth embodiment of the present invention. In FIGS. 10A and 10B, it is assumed that a device A is a low-powered device which is lower in process capability than a device B. Also, it is assumed that the device A (initiator) starts a key exchanging process to achieve key sharing with the device B (responder).

First, in FIG. 10A, upon start of a key exchanging process, the device A estimates a time Ta1 (including a time to be taken for generation of the secret value a) to be taken for calculation of the public key X by using the above Equation (1) to calculate a required operation time Ta (= Ta1) required at the device A for the key exchanging process (step S1001). This required operation time Ta (= Ta1) is calculated as follows, for example. The device A experimentally performs operations a plurality of times in advance by using various combinations of possible values of the variables *g* and *n*, and then stores a maximum value Time_max_all. Then, as in Equation (10) shown below, this maximum value is added with a fixed value $\alpha$ to obtain the required operation time Ta1.

$$Ta1 = Time\_max\_all + \alpha \qquad\qquad (10)$$

The device A then transmits the calculated the required operation time Ta1 to the device B, and notifies that the public value X will be sent by the time the required operation time Ta1 elapses (step S1002). Next, the device A generates the variables *g* and *n*, and then reports these variables to the device B (steps S1003 and S1004). In response, the device B acquires the variables $g$ and $n$ from the device A, and then returns an acknowledgement response (steps S1005 and S1006). Upon receipt of the response of acknowledgement of the variables $g$ and $n$ from the device B, the device A generates the secret value a, calculates the public value X by using the above Equation (1), and then transmits the calculated public value X to the device B (steps S1007, S1008, and S1010).

Upon transmission of the response of acknowledgement of the variables $g$ and $n$ to the device A (step S1006 ) , the device B extends a waiting limit (timeout time) for a response from the device A at a time when the required operation time Ta1 elapses from the transmission of the response (step S1009). That is, by the time when the required operation time Ta1 at maximum, the device B does not determine that the public value X cannot be received from the device A. Then, upon receipt of the public value X from the device A by the timeout time (step S1010), the device B generates the secret value $b$, and calculates the public value Y and the common key K by using the above Equations (2) and (3) (steps S1011 through S1013). The device B then transmits the calculated public value Y to the device A (step S1014).

The process sequence exemplarily shown in FIG. 10A is applied to a case where calculation of the common key K does not cause message transmission. Upon receipt of the public value Y from the device B (step S1014), the device A determines that a response of the public value in the DH method has been received. Therefore, the common key K can be correctly calculated even at the device A (step S1015). With this, successful key exchange can be achieved at both of the device A and the device B.

Next, the process sequence exemplarily shown in FIG. 10B is applied to a case where calculation of the common key K causes message transmission, and is to solve the problem caused when the device A takes a long time to generate the common key K after receiving the public value Y. That is, the process sequence of FIG. 10B is applied to a case where, after transmitting the public value Y, the device B waits for a report from the device A that calculation of the common key K has been completed.

In this case, the device A further estimates a required operation time Ta2 to be taken for calculation of the common key K by using the above Equation (4) (step S1021). This estimating process is carried out in a manner similar to that taken for estimating the required operation time Ta1. Then, the required operation time Ta2 is also transmitted to the device B (step S1022). Upon transmission of the public value Y, the device B extends a waiting limit (timeout time) for a response from the device A to a time when the required operation time Ta2 elapses from this transmission (steps S1034 and S1036). With this processes, the device B can receive a response message from the device A indicating that calculation of the common key K has been completed while preventing occurrence of a timeout (step S1037).

As described above, according to the common key exchanging method of the eighth embodiment of the present invention, it is possible to prevent the conventional problem that, while a low-powered device which starts a key exchanging process is still performing an operation of the key exchanging process, its counterpart device may determine that no response comes. Therefore, successful key exchange can be achieved.

In this eighth embodiment, correspondingly with the procedure described in the above fifth embodiment (FIG. 7), the procedure has been described in the case where the device which starts a key exchanging process is a low-powered device. However, this procedure can be similarly applied to any case as long as a low-powered device calculates the public value X and the common key K after its counterpart device obtains the required operation time (the sixth embodiment, for example).

Furthermore, in the eighth embodiment, the common key exchanging method has been described in the case where the device A (initiator) which starts a key exchanging process is a low-powered device. In a case where the device A (initiator) and its counterpart device B are both low-powered, an appropriate combination of the above-described embodiments is used to achieve a common key exchanging method.

(Ninth embodiment)

In the above first through eighth embodiments, the common key exchanging method has been described in the case where the low-powered device reports time information, that is, the required operation time, to its counterpart device and, in accordance with that report, the counterpart device extends the timeout time. Next, in the ninth embodiment, a common key exchanging method in which the required operation time is not reported is described below.

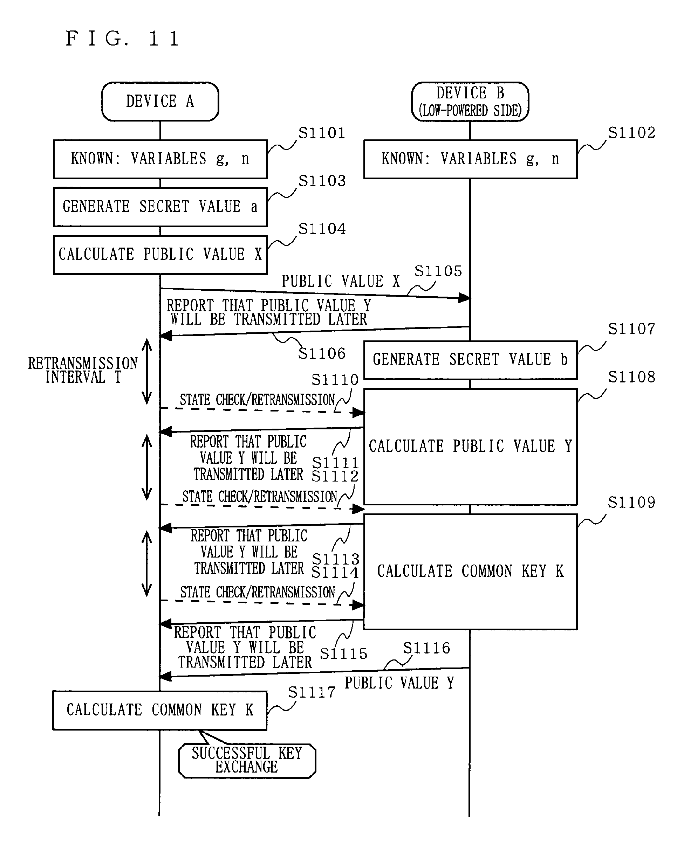

FIG. 11 is a process sequence diagram for describing the common key exchanging method according to the ninth embodiment of the present invention. In FIG. 11, the relationship between the device A and the device B is similar to that in the above first embodiment. Also, processes in steps S1101 through S1105 in FIG. 11 are similar to those in steps S301 through S305 in FIG. 3.

Upon receipt of the public value X from the device A (step S1105), the device B makes a response to the device A of reporting that the public value Y will be transmitted later (step S1106). After this report, the device B starts generating the secret value $b$, and sequentially calculates the public value Y and the common key K by using the above Equations (2) and (3) (steps S1107 through S1109). Concurrently with this calculation, the device B makes such a report as the above whenever receiving from the device A a state check/retransmission request, which will be described further below, until calculation of the public value Y and the common key K is completed (steps S1111, S1113, and S1115).

The device A performs a process of a state check/retransmission request at every predetermined retransmission interval T [second] (step S1110, S1112 , and S1114) whenever receiving a report from the device B that the public value Y will be transmitted later (steps S1106, S1111, S1113, and S1115) until receiving the public value Y from the device B (step S1116). Specifically, the device A sets the retransmission interval T [second] as being shorter than a predetermine timeout time. Upon receipt of a report from the device B that the public value Y will be transmitted later, the device A resets time measuring for a new start. With this, a timeout does not occur. Alternatively, once receiving a report from the device B that the public value Y will be transmitted later, the device A may switch to a process of indefinitely waiting for reception of the public value Y without setting the retransmission interval T.

Then, upon receipt of the public value Y from the device B (step S1116), the device A determines that a response of the public value in the DH method has been received. Therefore, the common key K can be correctly calculated also by the device A (step S1117). With this, successful key exchange can be achieved by both of the device A and the device B.

As described above, according to the common key exchanging method of the ninth embodiment of the present invention, successful key exchange can be achieved without the operation time required for a key exchanging process being estimated in advance by the low-powered device.

In this ninth embodiment, the common key exchanging method is achieved by applying a process of state check/retransmission request and a process of reporting that the public value Y will be transmitted later to the method according to the above first embodiment. These processes can be applied to the method according to any one of the second through eighth embodiments to achieve similar effects as those in the ninth embodiment. Here, as with the third embodiment (FIG. 5), for example, when the public value Y is transmitted (step S511) immediately after being calculated (step S509), the device A receiving the public value Y performs a state check on the device B as to whether calculation of the common key K has been completed. In response, the device B answers back to the device A that the common key K is being calculated.

Furthermore, in steps S1105 and 1106 in FIG. 11, transmission/reception may fail (packet loss may occur). To get around this problem, the device A may not wait for a report that the public value Y will be transmitted later (step S1106), but may start time measuring of the transmission interval T immediately after transmitting the public value X (step S1105).

In the above first through ninth embodiments, the operations used for key exchange in the DH method are exponential operations/modulo operations. However, the scope of the present invention is not limited to such operations. For example, as a modification of the DH method, an operation method using a mathematical set based on an elliptic curve can be used. Also, in the above first through ninth embodiments, as a method of estimating the required operation time with regard to the DH method, the calculation results are stored in advance. This is not meant to be restrictive. For example, a CPU usage rate at one moment is measured. When the CPU usage rate is high due to execution of other applications or the like, a required operation time can be estimated as being long. Furthermore, if there is a possibility that key exchange among a plurality of devices will occur simultaneously, a plurality of processes of the DH method will stay in a queue. To get around this problem, for example, a process wait queue for the processes of the DH method may be provided, and a required operation time may be estimated as being long in accordance with the sequence of the processes.

Still further, in the process sequences described in the first through ninth embodiments, the method of the present invention is applied only to the portions of the operations of the DH method and exchange of the public values. However, the method of the present invention can be applied to other portions of a key exchange protocol using the DH method. For example, as described with reference to FIG. 19, key exchange in the DH method is used at two portions (Phase 1 and Phase 2) in the IKE sequence. The message described in each embodiment can be executed in conjunction with other messages of the IKE. Specifically, an inquiry and a report of the required operation time Tb in step S601 and S603 of FIG. 6 may be carried out during negotiation of various parameters in Phase 1 of the IKE (step S1901 of FIG. 19).

Still further, in the above first through ninth embodiments, a high-powered device receives from a low-powered device a report of the required operation time or a report that a response will be transmitted later. Alternatively, the high-powered device does not necessarily have to receive such a report from the low-powered device, and can control the waiting limit (timeout time) for a response from the low-powered device. A method for such control is described below.

In this method, the high-powered device measures a time starting at a time of transmitting a predetermine message (the public value, for example) to the low-powered device and ending at a time of receiving a response from the low-powered device. As a specific example, when the high-powered device transmits the predetermined message to the low-powered device, a message transmission time T1, information that specifies the low-powered device (IP address, for example), and information that specifies a type of key exchange being processed (ID, for example) are recorded as key exchange information. Then, the high-powered device obtains a message reception time T2 when receiving the response message from the low-powered device. The high-powered device then extracts the key exchange information included in the response message, and then uses the time T1 of the corresponding key exchange information recorded in advance to calculate and record a time (T1 - T2). Calculation of this time (T1 - T2) is calculated even if a response message reception expiration time elapses (if a timeout occurs and key exchange fails). Then, when performing a key exchanging process of the same type from now on, the high-powered device sets a timeout time based on this calculated time (T1 - T2).

In this method, by the time when the time (T1 - T2) is calculated, the key exchanging process may fail due to a predetermined default value of the timeout time. However, the method makes it possible to adjust the timeout time so as to avoid another failure. If it is desired to avoid any failure, the default value of the timeout time is set to be sufficiently large. Also, the time (T1 - T2) calculated in a previous process may be continuously used, or the above-described measuring may be performed whenever a key exchanging process is performed for updating the time (T1 - T2). Furthermore, the calculated time (T1 - T2) is not necessarily used, and the timeout time may be adjusted only when the time ( T1 - T2 ) is longer than the default value. Still further, when the calculated time (T1 - T2) is shorter than the default value, the timeout time may be shortened.

Since this method ensures interchangeability with any existing key exchanging protocols, implementation of this method even in one communication device (with its counterpart communication device as being the existing device) can prevent the problem of failure in key exchange due to a timeout.

(Tenth embodiment)

Methods according to the following tenth and eleventh embodiments are to solve the first problem described in the Background Art section as well as the second problem described therein. In these embodiments, in order to solve the second problem, a start timing of a re-key process (will be described further below) is controlled. The methods according to these embodiments can be applied to a procedure in which the required operation time is exchanged before a key exchanging process starts (such as the procedure in the fourth embodiment). Two typical control types are described in the tenth and eleventh embodiments.

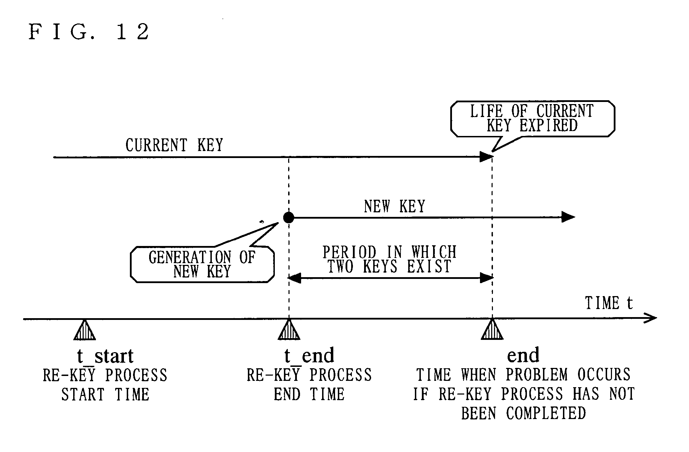

Prior to descriptions of these two embodiments, an outline of a re-key process is described with reference to FIG. 12.

As has been described in the Background Art section, if the same common key is being used for a long time, the common key may be decrypted by third party. In order to get around this problem, a common key to be generated is set with an expiration time. Then, before the expiration time of the common key currently being used elapses, a predetermined re-key process is performed to generate a next new common key, and the current common key is switched to this new common key before the expiration time of the current common key elapses. In the tenth embodiment, a start time (t_start) of the re-key process is calculated so that an end time (t_end) when the re-key process is completed is prior to a life expiration time (end) of the currently-used common key, and then the re-key process is started. In order to achieve the method according to the tenth embodiment, the key's expiration time has to be set longer than a time required from the start to the end of the re-key process (the time is defined, based on the procedure, by any of the above required operation times Ta1, Ta2, Tb1, and Tb2 or combinations thereof). Setting of this expiration time is performed generally during the process of negotiation of various parameters in FIG. 19 (step S1901).

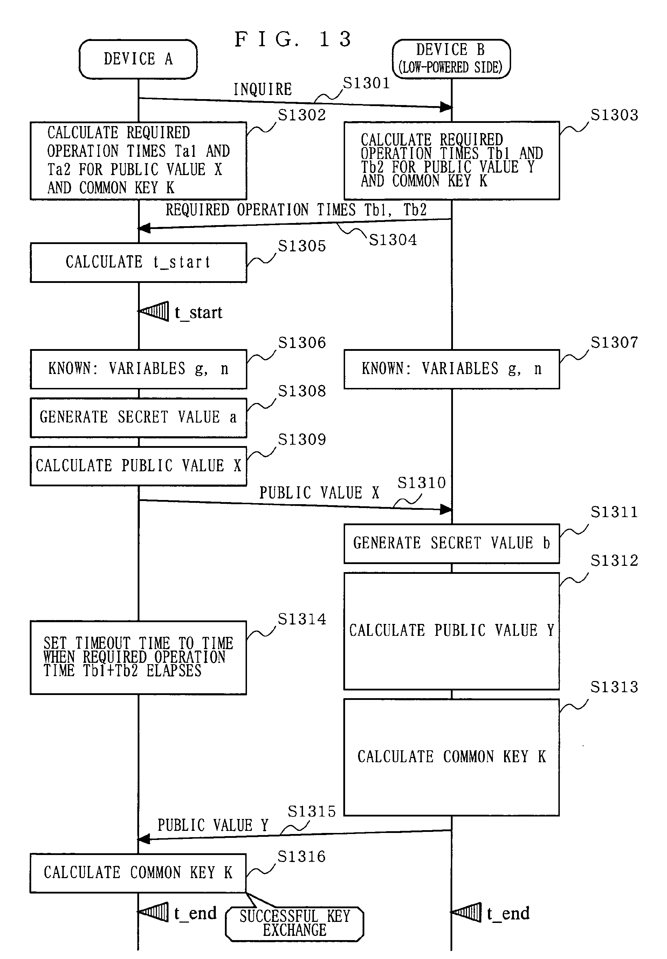

FIG. 13 is a process sequence diagram for describing a common key exchanging method according to the tenth embodiment of the present invention. In FIG. 13, it is assumed that a device B is a low-powered device which is lower in process capability than a device A. Also, it is assumed that the device A (initiator) starts a re-key process to achieve key sharing with the device B (responder). Furthermore, before performing the re-key process, the variables g and n for use in an operation of the re-key process are known in advance to the device A and the device B (steps S1306 and S1307).

Upon start of the re-key process, the device A first inquires of the device B about a required operation time (step S1301). Also, the device A estimates a time Ta1 to be taken for calculation of the public value X and a time Ta2 to be taken for calculation of the common key K to calculate a required operation time Ta (Ta1 and Ta2) to be taken by the device A for the re-key process (step S1302). These required operation times Tb1 and Tb2 are calculated as follows, for example. The device A performs operations a plurality of times in advance by using various combinations of possible values of the variables $g$ and $n$, and then separately stores a maximum time Time_maxX_all required for calculation of the public value X and a maximum time Time_maxK_all required for calculation of the common key K. Then, as in Equations (11) and (12) shown below, these maximum values are added with a fixed value $\alpha$ predetermined in advance to obtain the required operation times Ta1 and Ta2.

$$Ta1 = Time\_maxX\_all + \alpha \qquad (11)$$

$$Ta2 = Time\_maxK\_all + \alpha \qquad\qquad (12)$$

On the other hand, upon receipt of the inquiry from the device A, the device B estimates a time Tb1 to be taken for calculation of the public key Y and a time Tb2 to be taken for calculation of the common key K to calculate a required operation time Tb (Tb1 and Tb2) required by the device B for the re-key process (step S1303). These required operation times Tb1 and Tb2 are calculated by the above Equations (8-1) and (9-1). The device B then transmits the calculated required operation times Tb1 and Tb2 to the device A (step S1304).

Upon receipt of the required operation times Tb1 and Tb2 from the device B (step S1304), the device A calculates an arbitrary re-key process start time t_start which satisfies the following Equation (13) based on the required operation times Tb1 and Tb2 and its own required operation times Ta1 and Ta2 (step S1305).

$$t\_start < end - (Ta1 + Ta2 + Tb1 + Tb2) - \alpha \qquad\qquad (13)$$

Here, *end* represents an expiration time of the currently-used common key. In general, the expiration time set in the device A is equal to that set in the device B. However, different expiration times may be set in some rare cases. In such cases, an absolute value of a difference between an expiration time t_endA of the common key in the device A and an expiration time t_endB of that in the device B (| t_endB - t_endA |) is considered for allowance. In general, however, this adding process is not required, because the life of the common key is often set to a time several to ten times longer than a time required for calculation of the public value and the common key.

As evident from the above, the device A has to start inquiring about the required operation time early, making allowance for a time (t_AB) required for the processes in steps S1301 through S1305. For the purpose of achieving this, in one exemplary scheme, the processes in steps S1301 through S1305 are preformed immediately after generation of the current common key to calculate in advance the next re-key process start time t_start. Then, when a time (t_start - t_AB) comes, the processes in steps S1301 through S1305 are performed again to inquire about the latest required operation time, thereby recalculating the start time t_start.

When the calculated start time t_start comes, the device A starts a re-key process. First, the device A generates the secret value a, calculates the public value X by using the above Equation (1), and then transmits the calculated public value X to the device B (steps S1308 through S1310). Upon receipt of the public value X from the device A, the device B generates the secret value *b*, and then calculates the public value Y and a new common key K by using the above Equations (2) and (3) (steps S1311 through S1313). The device B then transmits the calculated public value Y to the device A (step S1315).

Based on the required operation time Tb received from the device B, the device A extends a waiting limit (timeout time) for a response from the device B to a time when the required operation time Tb (= Tb1 + Tb2) from the transmission of the public value X (step S1314). Then, upon receipt of the public value Y from the device B by the timeout time (step S1315), the device A determines that a response in the DH method has been received. Therefore, a new common key K can be correctly calculated also by the device A (step S1316), thereby achieving an exchange of the new common key between the device A and the device B before the life of the currently-used common key expires (t_end), that is, making the re-key process successful. Thereafter, this new common key K is used.

As described above, according to the common key exchanging method of the tenth embodiment of the present invention, the required operation time to be taken for a key exchanging process is estimated in advance and, based on the estimated time, one device calculates a re-key process start time. This makes it possible to achieve a successful re-key process before the life of the currently-used common key expires.

When the process of calculating the public value X within the required operation time Ta1 (steps S1308 and S1309) is performed concurrently with the process of calculating the public value Y within the required operation time Tb1 (steps S1311 and S1312), the above Equation (13) can be replaced by the following Equation (14), where MAX (Ta1, Tb1) represents any one of Ta1 and Tb1 that is larger.

$$t\_start < end - MAX(Ta1, Tb1) - (Ta2 + Tb2) - \alpha \qquad\qquad (14)$$

Also, when the process of calculating the common key K within the required operation time Ta2 (step S1316) is performed concurrently with the process of calculating the common key K within the required operation time Tb2 (step S1313), the above Equation (13) can be replaced by the following Equation (15), where MAX(Ta2, Tb2) represents any one of Ta2 and Tb2 which is larger.

$$t\_start < end - (Ta1 + Tb1) - MAX(Ta2, Tb2) - \alpha \qquad (15)$$

Furthermore, when the processes of calculating of the public values are performed concurrently with the process of calculation the common key, the following Equation (16) can be used.

$$t\_start < end - MAX(Ta1, Tb1)$$

$$- MAX(Ta2, Tb2) - \alpha \qquad (16)$$

(Eleventh embodiment)

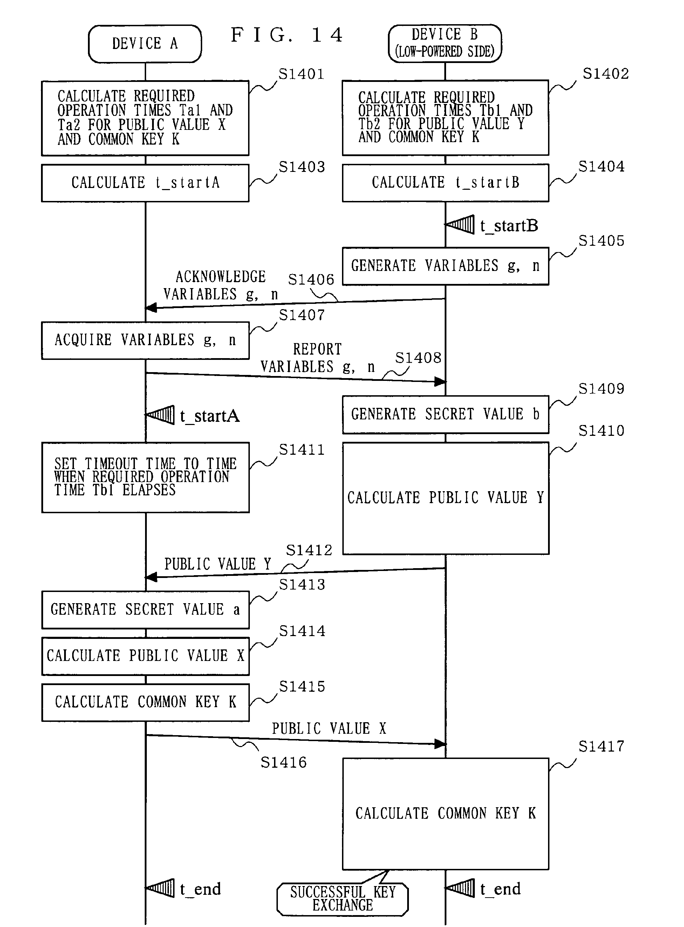

FIG. 14 is a process sequence diagram for describing a common key exchanging method according to the eleventh embodiment of the present invention. In FIG. 14, it is assumed that a device B is a low-powered device which is lower in process capability than a device A. In this eleventh embodiment, a re-key process start time t_start is estimated based on only each device's own required operation time. As a result, the low-powered device becomes an initiator of a re-key process.

The device A estimates a time Ta1 to be taken for calculation of the public value X and a time Ta2 to be taken for calculation of the common key K to calculate a required operation time Ta (Ta1 and Ta2) required by the device A for the re-key process (step S1401). These required operation times Ta1 and Ta2 are calculated by using the above Equations (11) and (12), for example. On the other hand, the device B estimates a time Tb1 to be taken for calculation of the public value Y and a time Tb2 to be taken for calculation of the common key K to calculate a required operation time Tb (Tb1 and Tb2) required by the device B for the re-key process (step S1402). These required operation times Tb1 and Tb2 are calculated by using the above Equations (8-1) and (9-1), for example.

Based on the estimated required operation times Ta1 and Ta2, the device A calculates an arbitrary re-key process start time t_startA which satisfies Equation (17) shown further below (step S1403). Also, based on the estimated required operation times Tb1 and Tb2, the device B calculates an arbitrary re-key process start time t_startB which satisfies Equation (18) shown further below (step S1404). In these Equations (17) and (18), it is assumed that the devices have the same capability, and each required operation time at the right side is doubled. As described above, if different life expiration times of the common key are set between the device A and the device B, *end* in Equation (17) is replaced by *end_*A and *end* in Equation (18) by *end_*B.

$$t\_startA < end - (Ta1 + Ta2) \times 2 - \alpha \qquad (17)$$

$$t\_startB < end - (Tb1 + Tb2) \times 2 - \alpha \qquad (18)$$

Since the device B is lower in capability than the device A in this example, the time at the right side of the above Equation (18) is earlier than the time at the right side of the above Equation (17). Therefore, in this case, when the start time t_startB comes, a re-key process is started by the device B. The device B generates the variables *g* and *n*, reports these variables to the device A, announcing that the re-key process has been started (steps S1405 and S1406). With this announcement, the device A starts the process steps without being restricted to its own calculated re-keyprocess start time t_startA. Next, the device A acquires the variables *g* and *n* from the device B, and then returns a response acknowledging these variables (steps S1407 and S1408). Upon receipt of this response acknowledging these variables *g* and *n* from the device A, the device B generates the secret value *b*, calculates the public value Y by using the above Equation (2), and then transmits the calculated public value Y to the device A (steps S1407, S1408, and S1410). When new variables *g* and *n* are not used (when the previous values are used), only reporting the start of the re-key process and providing an acknowledging response suffice.

Upon transmission of the response acknowledging the variables *g* and *n* to the device B (step S1408), the device A extends the waiting limit (timeout time) for a response from the device B to a time when the required operation time Tb1 elapses from this response transmission (step S1411). Then, upon receipt of the public value Y from the device B by the timeout time (step S1412), the device A generates the secret value *a*, calculates the public value X and the common key K by using the above Equations (1) and (4), and then transmits the calculated public value X to the device B (steps S1411 through S1414).

Upon receipt of the public value X from the device A, the device B determines that a response in the DH method has been received. Therefore, the common key K can be correctly calculated also by the device B (step S1415), thereby achieving an exchange of the new common key between the device A and the device B, that is, making the re-key process successful. Thereafter, this new common key K is used.

As described above, according to the common key exchanging method of the eleventh embodiment of the present invention, the operation time required for the common key exchanging method is estimated in advance by each device. Based on its own estimated time, each device calculates a re-key process start time, and a device whose start time comes earlier than the other starts the re-key process. With this, the devices can achieve a successful re-key process before the life of the currently-used common key expires without knowing the required operation time of the counterpart device each other.

The required operation time can be estimated based on a process time taken to exchange the currently-used or the previously-used common key, or a CPU load value. This process time or CPU load value is previously stored in a storage section (the database section 203 in FIG. 2). Alternatively, the required operation time can be estimated based on CPU load values of the device A and the device B at the time of the estimating process in steps S1401 and S1402 of FIG. 14 as well as the above process time or the above CPU load value.

It has been assumed herein that the life of the key is defined in units of time. This is not meant to be restrictive. For example, an upper limit to the (cumulative) number of bytes of the packets encrypted by one key may be set for use in defining the life of the key in units of bytes. In this case, the key's life expiration time is estimated from the number of bytes set for defining the life of the key. Specifically, the number of transmitted/received bytes of the encrypted communication packets per unit time is first calculated from communication history records. Then, a time required for transmission/reception of bytes as many as the number of bytes set for defining the life of the key is calculated to estimate the life expiration time.

(Twelfth embodiment)

A common key exchanging method according to a twelfth embodiment described below is to solve the third problem described in the Background Art section as well as the first and secondproblems also described therein. In the twelfth embodiment, in order to solve the third problem, only as for the re-key process, the load of an operation which takes a long time is distributed. As with the methods of the above tenth and eleventh embodiments, the method of the twelfth embodiment can be applied to the procedure in which the required operation times are exchanged before the start of a key exchanging process. In the twelfth embodiment, a typical control is described.

First, the concept of the control performed in the twelfth embodiment is described below. As has been described in the Background Art section, the heavy load of processing might interfere with execution of other applications on a low-powered device, such as a home networking appliance. However, this problem is merely applied to a case where the operation in the DH method is performed continuously, and the actual key exchanging process does not always have to be continuously performed or completed at its shortest time. Specifically, the key exchanging process has to be completed as early as possible when a new key is exchanged upon request from a terminal for packet communications, because a delay time in key exchange is recognized by a user as a delay at the application of the terminal. By contrast, as for the re-key process of regularly updating the key after an exchange of the key, the key exchanging process can be long as far as it is completed by the time when its life expires. Therefore, in the twelfth embodiment, it is determined whether the key exchanging process has to be completed within the shortest time. If the re-key process does not require such a key exchanging process which has to be completed within the shortest time, a heavy-load process is divided into small units for execution, thereby achieving temporal load distribution.

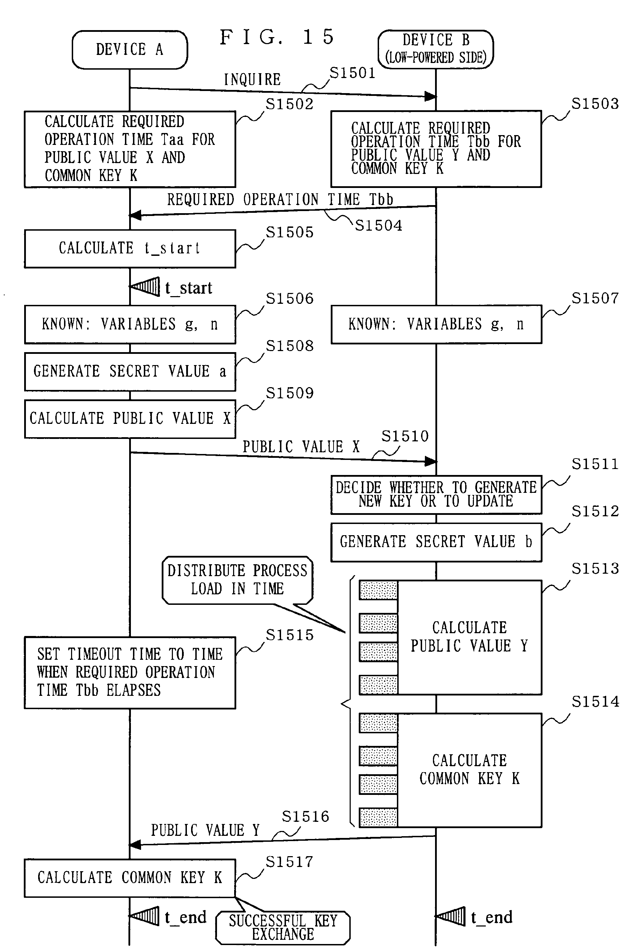

FIG. 15 is a process sequence diagram for describing the common key exchanging method according to the twelfth embodiment of the present invention. In FIG. 15, a device B is a low-powered device which is lower in process capability than a device A. Also, the device A (initiator) starts a key exchanging process to achieve key sharing with the device B (responder). Furthermore, it is assumed that, before performing the key exchanging process, the variables *g* and *n* for use in an operation of the key exchanging process are known in advance to the device A and the device B (steps S1506 and S1507).

First, the low-powered device B divides in advance the all processes associated with calculation of the public value Y and the common key K in the DH method into a plurality of equal process units (hereinafter referred to as small process units). Furthermore, it is assumed herein that a CPU use rate (Ucpu) at the time of processing a single small process unit within a predetermined unit time is actually measured, and then recorded. Still further, a total number of small process units to be processed by the device B is taken as Total. Still further, assumed is that it is known that the life of the key currently shared between the device A and the device B expires at a time *end*.

In FIG. 15, the device A inquires of the device B about a required operation time to be taken for updating the key (step S1501). Preferably, this inquiry is made sufficiently before the time *end*, such as at the time of starting a new key exchanging process or in a steady state after a key exchange has been completed. Upon receipt of the inquiry about the required operation time from the device A, the device B measures an average CPU use rate (Acpu) of other applications at that time. Then, while maintaining the processes of the other applications, the device B estimates the remaining CPU rate (Dcpu) to be used for the operation of the DH method and the number of small process units processable within the unit time to calculate a required operation time Tbb by using the following Equations (19) through (21) (step S1503).

$$Dcpu = 100 - Acpu \tag{19}$$

$$num = Dcpu/Ucpu \tag{20}$$

$$Tbb = Total \times Ucpu/Dcpu + \alpha \tag{21}$$

The device B then transmits the calculated required operation time Tbb to the device A (step S1504).

On the other hand, the device A also calculates its own required operation time Taa to be taken in the DH method by using the above Equations (19) through (21) (step S1502). Then, upon receipt of the required operation time Tbb from the device B, the device A calculates, based on the required operation times Tbb and Taa, a key exchanging process start time t_start which satisfies Equation (22) shown further below (step S1505).

$$t\_start < end - (Taa + Tbb) \tag{22}$$

Upon completion of this calculation, the device A waits until the start time t_start comes. When the start time t_start comes, the device A generates the secret value a, calculates the public value X by using the above Equation (1), and then transmits the calculated public value X to the device B (steps S1508 through S1510).

Upon receipt of the public value X from the device A, the device B decides based on the public value X whether to update the already existing key or to generate a new key (step S1511). Specifically, the device B searches a database (which corresponds to the database section 203 in FIG. 2) storing key information. If the corresponding key is found, it is decided as "update". If no corresponding key is found, it is decided as "new key". This deciding process is performed by the deciding section included in the device B (refer to FIG. 2B). Depending on the decision result, the device B changes the method of performing the operation of the DH method thereafter. That is, if it is decided as "new key", the device B performs the operation within its shortest time. If it is decided as "update", the device B performs the operation rather slowly by taking the required operation time Tbb reported to the device A. In the process sequence of FIG. 15, a case where it is decided as "update" is shown. The device B processes Dcpu/Ucpu small process units per unit time, calculates the public value Y by taking the required operation time Tbb, and then transmits the calculated public value Y to the device A (steps S1512 through S1514).

On the other hand, the device A extends a waiting limit (timeout time) for a response from the device B to a time when the required operation time Tbb elapses from the transmission of the public value X (step S1515). Then, upon receipt of the public value Y from the device B by the timeout time (step S1516), the device A calculates a new common key K by using the above Equation (4) (step S1517).

As described above, according to the twelfth embodiment of the present invention, it is first decided whether to complete the key exchanging process within the shortest time. Then, as for a process, such as the key updating process, which does not have to be completed within the shortest time, the heavy-load operation associated with the key exchanging process is distributed in time. With this, the key exchanging process less frequently occupies the CPU of the low-powered device for a long time, thereby making it possible for other applications on the same CPU to correctly operate. Furthermore, when the heavy-load operation is distributed in time, the life of the key is taken into consideration. With this, even when a process delay time for key exchange is longer than usual, communications, such as encryption/authentication processes, which are currently being performed, can be continued. In the twelfth embodiment, a long delay time until the public value is transmitted to the counterpart device as a response does not particularly pose problems because the length of the delay time in the key exchanging process does not affect user packet transmission/reception.

By way of example only, consider a case where the device B has a process amount of Im = 200 MI (MI = mega instructions) required for the CPU performing the operation of the DH method and the plurality of equal process units, that is, the small process units, of 2 MI. In this case, the value of Total is 100 (process units). In a case where the device B has a process capability of 100 MIPS (MIPS = MI/second), the CPU use rate Ucpu at the time of processing the small units of 2 MI is 2%. When only 50 MIPS of the process capability of the CPU of the device B is used for other applications, the remaining CPU use rate Dcpu is 50%. Therefore, the number of process units Dcpu/Ucpu of the DH method that are processable per unit time is 25 (process unit / second). Thus, Total × Ucpu / Dcpu is 100/25 = 4 seconds. With a fluctuation of 20% for allowance, the delay time will be 4.8 seconds.

A scheme of efficiently distributing the processing load is described below.

In this scheme, upon completion of key exchange, the device A and the device B enter the next key updating process as soon as possible. First, the device B estimates a CPU use amount Im (step S1503). The CPU use amount Im can be represented by, for example, the number of executed instructions in a key generating process performed by the device B (units: MI). For example, an immediately previous CPU use amount IM is stored, and then used. The device A calculates a time TWb by subtracting a required operation time Taa from the remaining time starting at the current time and ending at the life expiration time (*end*) of the key (step S1505), and then reports the calculated time TWb as an allocation time TWb to the device B together with the public value X (step S1510). The device B then allocates its CPU by referring to a CPU use rate (Im/TWb + β) per unit time (stepS1511) to performing the processes of generating the secret value *b* and calculating the public value Y and the common key K (steps S1512 through S1514). Here, β is an allowance for fluctuations in these processes and for other processes required therebefore and thereafter. In general, as the time TWb is longer, the CPU use rate (Im/TWb + β) per unit time can be sufficiently smaller than 100%. With this, the remaining portion of the CPU can be allocated for applications other than the application for the key exchanging process. Instead of a required operation time Tbb, the allocation time TWb + α for the device B is set as the timeout waiting time. In this case, step S1501 is not required.

In this manner, the CPU process amount per unit time for the key exchanging process can always be small, thereby allowing the CPU to perform more processes for other applications. Also, the CPU use ratio (Im/Twb + β) per unit time may be taken as a minimum ratio. If the CPU can process more with few other applications being executed, a larger CPU use ratio may be used for advancing the key exchanging process.

Furthermore, the processing load can be efficiently distributed as described above even when the process of calculating the public value and the process of calculating the common key are concurrently performed by the device A and the device B in the procedure of FIG. 15. In this case, the device B estimates the CPU use amount Im, calculates a remaining time TYb from the current time to the life expiration time of the key to allocate a CPU use ratio (Im/TYb + β ) per unit time to the CPU. Then, the device B generates the secret value *b* and calculates the public value Y and the common key K. In general, as the remaining time TYb is longer, the CPU use rate (Im/TYb + β) per unit time can be sufficiently smaller than 100%. With this, the remaining portion of the CPU can be allocated for applications other than the application for the key exchanging process. On the other hand, the device A estimates its own CPU use amount. The previous CPU amount is Im also at the device A. The device A then calculates a remaining time TYa from the current time to the life expiration time of the key to allocate a CPU use ratio (Im/TYa + β ) per unit time to the CPU. Then, the device A generates the secret value a and calculates the public value X and the common key K. When the CPU use amount of the device A is different from that of the device B, the CPU use amount of the device A is used.

Note that an operation proceeding speed of the device A is approximately equal to that of the device B. Therefore, reporting of the public value X and reporting of the public value Y are performed at approximately the same time. With this, even the CPU process capability of the device B is low, calculation of the common key K by the device B can be completed by the life expiration time of the key.

(Other applied embodiments)

In the above first through twelfth embodiments, described is the common key exchanging method particularly applied to the DH method and the IKE method in a case where a common key is exchanged between two communication devices for transmitting and receiving encrypted/authenticated data. However, the common key exchanging method of the present invention can be applied to methods other than the DH method and the IKE method as long as a common key can be calculated by a device based on a secret value calculated thereby and a public value received from its counterpart device.

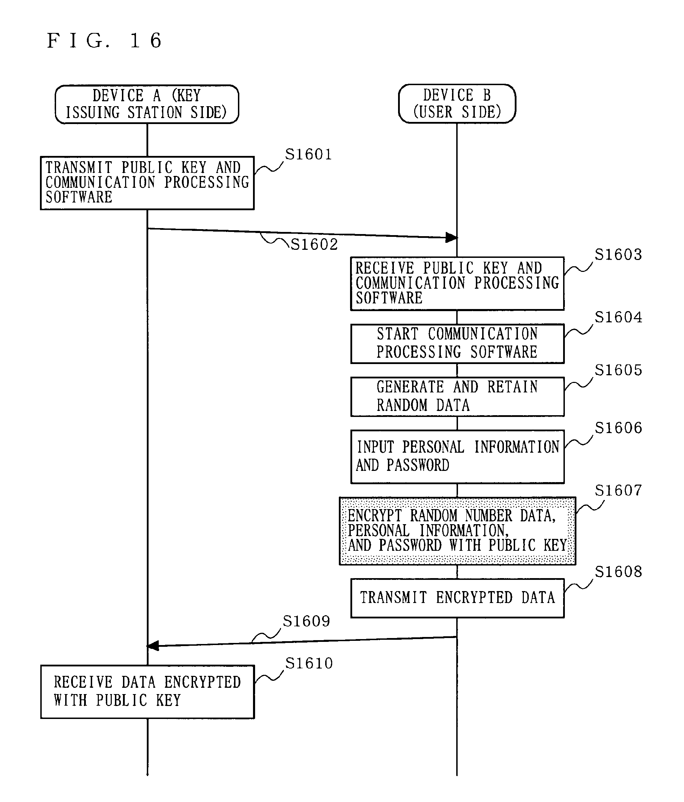

For example, the common key exchanging method of the present invention can be applied to a case where a session common key (or information for exchanging a session common key) is encrypted by a public key for distribution, as illustrated in FIG. 16. In this case, if the device B (user side) is a low-powered device, the time to be taken in step S1607 (a dotted portion) is long, and therefore a timeout in receiving a response may possibly occur at the device A (key issuing station side). In order to get around this problem, for example, the device B may report a required operation time to be taken for a public key encryption process to the device A by the time of carrying out step S1603, or may report that transmission of the data encrypted with the public key will delayed after step S1603.

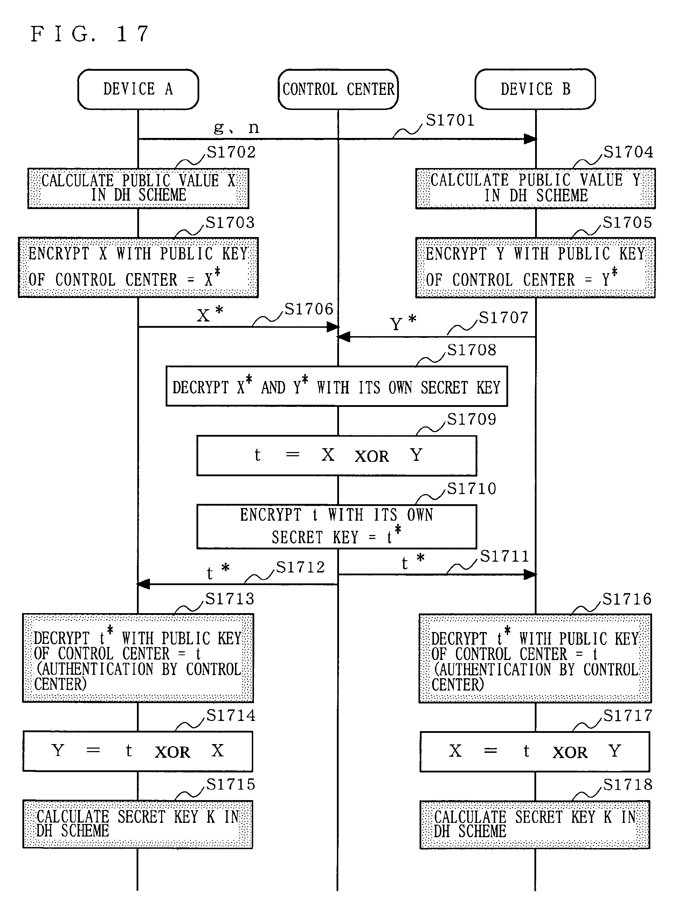

Also, the common key exchanging method of the present invention can be applied to a case where a key is distributed via a key control center to the device A and the device B. In this case, each of the processes of step S1702 through S1705, S1713, S1715, S1716, and S1718 (dotted portions) in FIG. 17 takes a long time, and therefore a timeout in receiving a response may possibly occur at either or both of the device A and the device B. In this case, each device reports to its counterpart device a required operation time for the relevant step by the time when it is carried out or reports that the process will be delayed.

Furthermore, in each of the above embodiments, a delay control of the timeout time is described by taking a key exchanging process as an example of a heavy-load process. This delay control can also be applied to an authentication process using a digital signature or a public encryption key, such an authentication process being associated with a key exchanging process. Also in this case, the timeout time for a process which will be delayed due to a time-consuming operation included in an authentication process can be extended based on the required operation time calculated in advance.

Typically, the common key exchanging method described in each of the above embodiments is achieved by the CPU interpreting predetermined program data stored in a storage device (ROM, RAM, hard disk, etc.), the program data capable of causing the above-described procedure to be carried out. In this case, the program data may be introduced to the storage device via a recording medium, or may be executed directly from the recording medium. The recording medium may be a ROM, a RAM, a flexible disk, a CD-ROM, a DVD, a memory card, a hard disk, etc. Also, the recording medium represents a concept including even a communication medium, such as a telephone line or a carrier line.

The following are exemplary methods and devices according to the present invention which are not explicitly claimed but will be readily understood from the above descriptions.

Method 1. An exemplary common key exchanging method according to any one of claims 2, 3, 4, and 5, further comprising:

an estimating step, performed by the other one of the communication devices, of estimating a required operation time to be taken for the predetermined operation;
a time transmitting step, performed by the other one of the communication devices, of transmitting the estimated required operation time to the one of the communication devices; and
a receiving step, performed by the one of the communication devices, of receiving the required operation time from the other one of the communication devices.

Method 2. An exemplary common key exchanging method according to the above exemplary method 1, further comprising
a step, performed by the one of the communication devices, of making an inquiry of the other one of the communication devices about the required operation time, wherein
in response to the inquiry from the one of the communication devices, the other one of the communication devices performs the estimating step and the time transmitting step.

Method 3. An exemplary common key exchanging method according to the above exemplary method 1, wherein
the other one of the communication devices stores in advance the required operation time.

Method 4. An exemplary common key exchanging method according to any one of claim 10 and the above exemplary method 3, wherein
the required operation time stored in advance is a maximum time previously taken for the predetermined operation.

Method 5. An exemplary common key exchanging method according to any one of claims 2, 3, 4, and 5, further comprising:

a step, performed by the other one of the communication devices, of transmitting at least once to the one of the communication devices a report that a response will be delayed by the next response timing; and
a step, performed by the one of the communication devices, of receiving the report from the other one of the communication devices, wherein
in the setting step, a waiting limit for the response is set based on the report.

Method 6. An exemplary common key exchanging method according to any one of claims 2, 3, 4 and 5, further comprising:

a step, performed by the one of the communication devices, of measuring a time starting at a time of transmitting a message and ending at a time of receiving a response after the predetermined operation from the other one of the communication devices, so as to obtain a time to be taken for the predetermined operation.

Device 1. An exemplary communication device according to claim 19, wherein
the acquiring section includes:

a public value calculating section for calculating its own public value and transmitting the calculated public value to the counterpart communication device; and

a common key calculating section for calculating a common key based on a public key of the counterpart communication device received from the counterpart communication device, and

the setting section sets the waiting limit based on at least either one of a time required for calculation of the public value performed by the counterpart communication device and a time required for calculation of the common key performed by the counterpart communication device.

Device 2. An exemplary communication device according to claim 19, wherein

the acquiring section includes a common key calculating section for calculating the common key,

the information transmitting section performs a predetermined encryption process on the common key calculated by the common key calculating section or information for generating the common key for transmission to the counterpart communication device, and

the setting section sets the waiting limit based on either one of a time required for decryption of the encrypted common key performed by the counterpart communication device and a time required for decryption of the encrypted information and generation of the common key performed by the counterpart communication device.

Device 3. An exemplary communication device according to claim 19, wherein

when the communication device receives either one of the common key which has been encrypted and information, which has been encrypted, for generating the common key from the counterpart communication device after transmitting an arbitrary message, the setting section sets the waiting limit based on either one of a time required for encryption of the common key performed by the counterpart communication device and a time required for encryption of the information performed by the counterpart communication device.

Device 4. An exemplary communication device according to claim 19, wherein

for transmission of data with a digital signature for authentication to the counterpart communication device, the setting section sets the waiting limit based on a time required for an identity authentication process performed by the counterpart communication device based on the data with the digital signature.

Device 5. An exemplary communication device according to claim 19, wherein

for transmission of data using public key encryption for authentication to the counterpart communication device, the setting section sets the waiting limit based on a time required for an identity authentication process performedby the counterpart communication device based on the data using the public key encryption.

Device 6. An exemplary communication device according to claim 19, wherein

the setting section obtains a time to be taken for the predetermined operation based on the required operation time estimated for the predetermined operation received from the counterpart communication device.

Device 7. An exemplary communication device according to claim 19, further comprising

an inquiry transmitting section for making an inquiry of the counterpart communication device about the time required for the predetermined operation to be performed by the next response timing.

Device 8. An exemplary communication device according to any one of claims 27 and 28, wherein

the time transmitting section transmits the required operation time in response to the inquiry from the counterpart communication device.

Device 9. An exemplary communication device according to any one of claims 27 and 28, wherein

the communication device stores the required operation time in advance.

Device 10. An exemplary communication device according to the above exemplary device 9, wherein

the required operation time stored in advance is a maximum time previously taken for the predetermined operation.

Device 11. An exemplary communication device according to claim 19, wherein

the setting section measures a time starting at a time when a message is transmitted and ending at a time of receiving a response after the predetermined operation from the counterpart communication device.

Device 12 . An exemplary communication device according to claim 20, wherein

when the public value and the common key are calculated by the counterpart communication device by the next response timing,

the setting section sets a waiting limit for a response with regard to completion of transmission of the public value or completion of calculation of the common key based on a total time to be taken for calculation of the public value and the common key performed by the counterpart communication device.

Device 13 . An exemplary communication device according to claim 20, wherein

when the public value is calculated by the counterpart communication device by the next response timing,

the setting section sets a waiting limit for a response with regard to transmission of the public value or completion of calculation of the common key based on a time to be taken for calculation of the public value performed by the counterpart communication device.

Device 14 . An exemplary communication device according to claim 20, wherein

when the common key is calculated by the counterpart communication device by the next response timing,

the setting section sets a waiting limit for a response with regard to transmission of the public value or completion of calculation of the common key based on a time to be taken for calculation of the common key performed by the counterpart communication device.

Device 15. An exemplary communication device according to claim 20, further comprising:

a completion report transmitting section for transmitting a completion report after completion of calculation of the common key to the counterpart communication device; and

a completion report receiving section for refraining from determining whether the key exchanging process has failed until receiving the completion report from the counterpart communication device.

Method A-1. An exemplary common key exchanging method for exchanging a common key between two communication devices for transmission and reception of encrypted/authenticated data, the method comprising:

an estimating step, performed by each of the communication devices, of estimating a required operation time to be taken for a predetermined operation for calculation of a common key;

a calculating step, performed by each of the communication devices, of calculating a process start time for completing a process of exchanging the common key by a time when the process of exchanging the common key with each other should be completed; and

a start step, performed by either one of the communication devices, of starting the key exchanging process at the time of the process start time.

Method A-2. An exemplary common key exchanging method according to the above exemplary method A-1, further comprising:

a time transmitting step, performed by another of the communication devices, of transmitting the required operation time estimated in the estimating step; and

a step performed by the one of the communication devices, of receiving the required operation time of the other one of the communication devices, wherein

in the calculating step, the one of the communication devices calculates the process start time based on the required operation time of the one of the communication devices and the required operation time of the other one of the communication devices.

Method A-3. An exemplary common key exchanging method according to the above exemplary method A-2, further comprising

a step, performed by the one of the communication devices, of making an inquiry of the other one of the communication devices about the required operation time, wherein

in response to the inquiry from the one of the communication devices, the other one of the communication devices performs the estimating step and the time transmitting step.

Method A-4. An exemplary common key exchanging method according to the above exemplary method A-1, wherein

either one of the communication devices whose process start time calculated in the calculating step comes earlier performs the start step at the process start time.

Method A-5. An exemplary common key exchanging method according to any one of the above exemplary methods A-1 through A-4, further comprising

a deciding step, performed by each of the communication devices, of deciding whether to generate a new common key or to update the common key, wherein

when it is decided to update, the predetermined operation performed for calculation of the common key is divided into predetermined small units for temporal load distribution.

Method A-6. An exemplary common key exchanging method according to the above exemplary method A-5, wherein

load distribution is performed by either one of the communication devices that takes a longer time to perform the predetermined operation for calculation of the common key.

Method A- 7 . An exemplary common key exchanging method according to the above exemplary method A-1, wherein

in the estimating step, the required operation time of each of the communication devices is estimated as being twice as long as an actual time to be taken for the predetermined operation performed by each of the communication devices for calculation of the common key.

Device A-1. An exemplary communication device for exchanging a common key with a counterpart communication device for transmission and reception of encrypted/authenticated data, comprising:

an estimating section for estimating a required operation time to be taken for a predetermined operation for calculation of a common key;
a calculating section for calculating a process start time for completing a process of exchanging the common key by a time when the process of exchanging the common key with the counterpart communication device should be completed; and
a processing section for starting the key exchanging process at the time of the process start time.

Device A-2. An exemplary communication device according to the above exemplary device A-1, further comprising
a receiving section for receiving the required operation time of the counterpart communication device, wherein the calculating section calculates the process start time based on the required operation time of the communication device and the required operation time of the counterpart communication device.

Device A-3. An exemplary communication device according to the above exemplary device A-1, further comprising
a time transmitting section for transmitting the required operation time estimated in the estimating section to the counterpart communication device.

Device A-4. An exemplary communication device according to the above exemplary device A-2, further comprising
an inquiring section for making an inquiry of the counterpart communication device about the required operation time.

Device A-5. An exemplary communication device according to the above exemplary device A-3, wherein
in response to an inquiry from the counterpart communication device, the communication device transmits the required operation time to the counterpart communication device.

Device A-6. An exemplary communication device according to the above exemplary device A-1, wherein
the processing section starts the key exchanging process when the calculated process start time comes earlier than the process start time of the counterpart communication device.

Device A-7. An exemplary communication device according to the above exemplary device A-1, further comprising
a deciding section for deciding whether to generate a new common key or to update the common key, and when it is decided to update, the predetermined operation performed for calculation of the common key is divided into predetermined small units for temporal load distribution.

Device A-8. An exemplary communication device according to the above exemplary device A-7, wherein
load distribution is performed when the communication device takes a long time to perform the predetermined operation for calculation of the common key.

While the invention has been described in detail, the foregoing description is in all aspects illustrative and not restrictive. It is understood that numerous other modifications and variations can be devised without departing from the scope of the invention.

**Claims**

1. A common key exchanging method for exchanging a common key between two communication devices for transmission and reception of encrypted/authenticated data, comprising:

an information transmitting step, performed by at least one of the communication devices, of transmitting information required for another one of the communication devices to acquire the common key to the other one of the communication devices;
a setting step, performed by said at least one of the communication devices, of setting a waiting limit for a response from the other one of the communication devices based on a time required for a predetermined operation to be performed by the other one of the communication devices by a next response timing;
an acquiring step, performed by the other one of the communication devices, of acquiring the common key from the information by performing the predetermined operation; and
a response transmitting step, performed by the other one of the communication devices, of transmitting a predetermined response to the one of the communication devices in the next response timing.

2.  The common key exchanging method according to claim 1, wherein

    each of the communication devices calculates its own public value for transmission to the other, and calculates the common key based on the public value received from the other, thereby achieving an exchange of the common key, and

    in the setting step, the waiting limit is set based on at least either one of a time required for calculation of the public value performed by the other one of the communication devices and a time required for calculation of the common key performed by the other one of the communication devices.

3.  The common key exchanging method according to claim 1, wherein

    the one of the communication devices encrypts a common key generated by a unit included in the one of the communication devices or information for generating the common key and transmits the encrypted common key or the encrypted information, and the other of the communication devices decrypts the encrypted common key or the encrypted information to generate a common key and transmits a response of acknowledging the common key to the one of the communication devices, thereby achieving an exchange of the common key, and

    in the setting step, the waiting limit is set based on a time required for decryption of the encrypted common key or a time required for decryption of the encrypted information and generation of the common key performed by the other one of the communication devices.

4.  The common key exchanging method according to claim 1, wherein

    after receiving a request message from the one of the communication devices, the other one of the communication devices encrypts the common key or information for generating a common key by using a public key received from the one of the communication devices and transmits the encrypted common key or the encrypted information to the one of the communication devices, thereby achieving an exchange of the common key, and

    in the setting step, the waiting limit is set based on a time required for encryption of the common key or the information for generating the common key.

5.  The common key exchanging method according to claim 1, wherein

    the predetermined operation is either one of an operation for an authentication process associated with acquisition of the common key and an operation for acquisition of the common key and the authentication process accompanied thereby.

6.  The common key exchanging method according to claim 5, wherein

    the one of the communication devices transmits data with a digital signature for authentication to the other one of the communication devices, and the other one of the communication devices performs an identity authentication process based on the data with the digital signature received from the one of the communication devices, thereby achieving the authentication process, and

    in the setting step, the waiting limit is set based on a time required for the identity authentication process performed by the other one of the communication devices.

7.  The common key exchanging method according to claim 5, wherein

    the one of the communication devices transmits data using public key encryption for authentication to the other one of the communication devices, and the other one of the communication devices performs an identity authentication process based on the data using public key encryption received from the one of the communication devices, thereby achieving the authentication process, and

    in the setting step, the waiting limit is set based on a time required for the identity authentication process performed by the other one of the communication devices.

8.  The common key exchanging method according to claim 1, further comprising:

    an estimating step, performed by the other one of the communication devices, of estimating a required operation time to be taken for the predetermined operation;
    a time transmitting step, performed by the other one of the communication devices, of transmitting the estimated required operation time to the one of the communication devices; and
    a receiving step, performed by the one of the communication devices, of receiving the required operation time from the other one of the communication devices.

9.  The common key exchanging method according to claim 8, further comprising
    a step, performed by the one of the communication devices, of making an inquiry of the other one of the communication devices about the required operation time, wherein

in response to the inquiry from the one of the communication devices, the other one of the communication devices performs the estimating step and the time transmitting step.

**10.** The common key exchanging method according to claim 8, wherein
the other one of the communication devices stores in advance the required operation time.

**11.** The common key exchanging method according to claim 1, further comprising:

a step, performed by the other one of the communication devices, of transmitting at least once to the one of the communication devices a report that a response will be delayed by the next response timing; and
a step, performed by the one of the communication devices, of receiving the report from the other one of the communication devices, wherein
in the setting step, a waiting limit for the response is set based on the report.

**12.** The common key exchanging method according to claim 1, further comprising:

a step, performed by the one of the communication devices, of measuring a time starting at a time of transmitting a message and ending at a time of receiving a response after the predetermined operation from the other one of the communication devices, so as to obtain a time to be taken for the predetermined operation.

**13.** The common key exchanging method according to claim 2, wherein
the public value and the common key are calculated by the other one of the communication devices by the next response timing, and
in the setting step, a waiting limit for a response with regard to transmission of the public value or completion of calculation of the common key is calculated based on a total time to be taken for calculation of the public value and the common key performed by the other one of the communication devices.

**14.** The common key exchanging method according to claim 2, wherein
the public value is calculated by the other one of the communication devices by the next response timing, and
in the setting step, a waiting limit for a response with regard to transmission of the public value or completion of calculation of the common key is calculated based on a time to be taken for calculation of the public value performed by the other one of the communication devices.

**15.** The common key exchanging method according to claim 2, wherein
the common key is calculated by the other one of the communication devices by the next response timing, and
in the setting step, a waiting limit for a response with regard to transmission of the public value or completion of calculation of the common key is calculated based on a time to be taken for calculation of the common key performed by the other one of the communication devices.

**16.** The common key exchanging method according to claim 2, further comprising:

a step, performed by each one of the communication devices, of transmitting a completion report to the other after calculation of the common key has been completed; and
a step, performed by each one of the communication devices, of refraining from determining whether a key exchanging process has failed until a completion report is received from another one of the communication devices.

**17.** The common key exchanging method according to claim 2, wherein
the information transmitting step, the setting step, the acquiring step, and the response transmitting step are preformed in a message sequence in the IKE.

**18.** A communication device for exchanging a common key with a counterpart communication device for transmission and reception of encrypted/authenticated data, comprising:

an information transmitting section of transmitting information required for the counterpart communication device to acquire the common key to the counterpart communication device;
a receiving section for receiving a response from the counterpart communication device; and

a setting section for setting a waiting limit for the response to be received by the receiving section from the counterpart communication device based on a time required for a predetermined operation to be performed by the counterpart communication device by a next response timing.

19. The communication device according to claim 18, further comprising:

an acquiring section for acquiring the common key from the information by performing the predetermined operation; and
a response transmitting section for transmitting a predetermined response to the counterpart communication device in the next response timing.

20. The communication device according to claim 18, wherein
the acquiring section includes:

a public value calculating section for calculating its own public value and transmitting the calculated public value to the counterpart communication device; and
a common key calculating section for calculating a common key based on a public key of the counterpart communication device received from the counterpart communication device, and

the setting section sets the waiting limit based on at least either one of a time required for calculation of the public value performed by the counterpart communication device and a time required for calculation of the common key performed by the counterpart communication device.

21. The communication device according to claim 18, wherein
the acquiring section includes a common key calculating section for calculating the common key,
the information transmitting section performs a predetermined encryption process on the common key calculated by the common key calculating section or information for generating the common key for transmission to the counterpart communication device, and
the setting section sets the waiting limit based on either one of a time required for decryption of the encrypted common key performed by the counterpart communication device and a time required for decryption of the encrypted information and generation of the common key performed by the counterpart communication device.

22. The communication device according to claim 18, wherein
when the communication device receives either one of the common key which has been encrypted and information, which has been encrypted, for generating the common key from the counterpart communication device after transmitting an arbitrary message, the setting section sets the waiting limit based on either one of a time required for encryption of the common key performed by the counterpart communication device and a time required for encryption of the information performed by the counterpart communication device.

23. The communication device according to claim 18, wherein
for transmission of data with a digital signature for authentication to the counterpart communication device, the setting section sets the waiting limit based on a time required for an identity authentication process performed by the counterpart communication device based on the data with the digital signature.

24. The communication device according to claim 18, wherein
for transmission of data using public key encryption for authentication to the counterpart communication device, the setting section sets the waiting limit based on a time required for an identity authentication process performed by the counterpart communication device based on the data using the public key encryption.

25. The communication device according to claim 18, wherein
the setting section obtains a time to be taken for the predetermined operation based on the required operation time estimated for the predetermined operation received from the counterpart communication device.

26. A communication device for exchanging a common key with a counterpart communication device for transmission and reception of encrypted/authenticated data, comprising:

a receiving section for receiving information required for obtaining the common key from the counterpart communication device;

a time transmitting section for transmitting information regarding a time required for obtaining the common key from the information received by the receiving section to the counterpart communication device;
an acquiring section for acquiring the common key from the information received by the receiving section by performing a predetermined operation; and
a response transmitting section for transmitting a predetermined response to the counterpart communication device in a predetermined response timing.

27. The communication device according to claim 26, further comprising:

an estimating section for estimating a required operation time to be taken for a predetermined operation performed by a next response timing, wherein
the time transmitting section transmits the required operation time estimated by the estimating section to the counterpart communication device.

28. The communication device according to claim 19, further comprising:

an estimating section for estimating a required operation time to be taken for a predetermined operation performed by a next response timing,
a time transmitting section for transmitting the required operation time estimated by the estimating section to the counterpart communication device.

29. The communication device according to claim 18, further comprising
an inquiry transmitting section for making an inquiry of the counterpart communication device about the time required for the predetermined operation to be performed by the next response timing.

30. The communication device according to claim 19, further comprising
a delay report transmitting section for transmitting a report that a response will be delayed to the counterpart communication device at least once by the next response timing.

31. The communication device according to claim 26, wherein
the time transmitting section transmits a report that a response will be delayed to the counterpart communication device at least once by the next response timing.

32. The communication device according to claim 18, wherein
the setting section measures a time starting at a time when a message is transmitted and ending at a time of receiving a response after the predetermined operation from the counterpart communication device.

33. A program for achieving a method of exchanging a common key for transmission and reception of encrypted/authenticated data between two communication devices, the program comprising:

an information transmitting step, performed by at least one of the communication devices, of transmitting information required for another one of the communication devices to acquire the common key to the other one of the communication devices;
a setting step, performed by said at least one of the communication devices, of setting a waiting limit for a response from the other one of the communication devices based on a time required for a predetermined operation to be performed by the other one of the communication devices by a next response timing;
an acquiring step, performed by the other one of the communication devices, of acquiring the common key from the information by performing the predetermined operation; and
a response transmitting step, performed by the other one of the communication devices, of transmitting a predetermined response to the one of the communication devices in the next response timing.

34. A computer-readable recording medium having recorded thereon a program for achieving a method of exchanging a common key for transmission and reception of encrypted/authenticated data between two communication devices, the program comprising:

an information transmitting step, performed by at least one of the communication devices, of transmitting information required for another one of the communication devices to acquire the common key to the other one of the communication devices;

a setting step, performed by said at least one of the communication devices, of setting a waiting limit for a response from the other one of the communication devices based on a time required for a predetermined operation to be performed by the other one of the communication devices by a next response timing;

an acquiring step, performed by the other one of the communication devices, of acquiring the common key from the information by performing the predetermined operation; and

a response transmitting step, performed by the other one of the communication devices, of transmitting a predetermined response to the one of the communication devices in the next response timing.

F I G. 1A

FIG. 1B

FIG. 2A

GW-TYPE DEVICE 102

COMMUNICATION FOR KEY EXCHANGE

208

VIA PUBLIC NETWORK
GW-TYPE DEVICE

WAN I/F 206

COMMUNICATION PROTOCOL PROCESSING SECTION

COMMON KEY EXCHANGING SECTION 201

DB MANAGING SECTION 202

DB SECTION 203

ENCRYPTING/AUTHENTICATING SECTION 204

ENCRYPTING PROCESS

DECRYPTING PROCESS

COMMUNICATION PROTOCOL PROCESSING SECTION 205

LAN I/F 207

TERMINAL

COMMUNICATION OF PLAINTEXT (NORMAL DATA)

COMMUNICATION OF ENCRYPTED DATA

EP 1 441 485 A2

F I G.  2 B

FIG. 3

```
      ┌──────────────┐                              ┌──────────────────────┐
      │   DEVICE A   │                              │       DEVICE B       │
      └──────┬───────┘                              │   (LOW-POWERED SIDE) │
             │                                      └───────────┬──────────┘
 ┌───────────────────────────┐  S301                            │           S302
 │ KNOWN: VARIABLES g, n     │           ┌───────────────────────────────┐
 └───────────────────────────┘           │ KNOWN: VARIABLES g, n         │
 ┌───────────────────────────┐  S303     └───────────────────────────────┘
 │ GENERATE SECRET VALUE a   │
 └───────────────────────────┘  S304
 ┌───────────────────────────┐
 │ CALCULATE PUBLIC VALUE X  │
 └───────────────────────────┘
```

S301 — KNOWN: VARIABLES g, n (DEVICE A)

S303 — GENERATE SECRET VALUE a

S304 — CALCULATE PUBLIC VALUE X

PUBLIC VALUE X — S305

S302 — KNOWN: VARIABLES g, n (DEVICE B)

S306 — CALCULATE REQUIRED OPERATION TIME Tb FOR PUBLIC VALUE Y AND COMMON KEY K

REQUIRED OPERATION TIME Tb

SHORTER THAN Tb

S307

S308 — GENERATE SECRET VALUE b

S309 — CALCULATE PUBLIC VALUE Y

S311 — SET TIMEOUT TIME TO TIME WHEN REQUIRED OPERATION TIME Tb ELAPSES

S310 — CALCULATE COMMON KEY K

PUBLIC VALUE Y — S312

S313 — CALCULATE COMMON KEY K

SUCCESSFUL KEY EXCHANGE

F I G.  4

DEVICE A

DEVICE B
(LOW-POWERED SIDE)

KNOWN: VARIABLES g, n — S401

KNOWN: VARIABLES g, n — S402

GENERATE SECRET VALUE a — S403

GENERATE SECRET VALUE b — S405

CALCULATE PUBLIC VALUE X — S404

CALCULATE PUBLIC VALUE Y — S406

PUBLIC VALUE X — S407

CALCULATE REQUIRED OPERATION TIME Tb2 FOR COMMON KEY K — S408

SHORTER THAN Tb2

REQUIRED OPERATION TIME Tb2 — S409

CALCULATE COMMON KEY K — S410

SET TIMEOUT TIME TO TIME WHEN REQUIRED OPERATION TIME Tb2 ELAPSES — S411

PUBLIC VALUE Y — S412

CALCULATE COMMON KEY K — S413

SUCCESSFUL KEY EXCHANGE

F I G. 5

```
        ┌──────────────┐                          ┌──────────────────┐
        │   DEVICE A   │                          │     DEVICE B     │
        └──────────────┘                          │ (LOW-POWERED SIDE)│
                                                   └──────────────────┘
```

S501 ┌──────────────────────────────┐      S502 ┌──────────────────────────────┐
     │ KNOWN: VARIABLES g, n        │           │ KNOWN: VARIABLES g, n        │
     └──────────────────────────────┘           └──────────────────────────────┘

S503 ┌──────────────────────────────┐
     │ GENERATE SECRET VALUE a      │
     └──────────────────────────────┘

S504 ┌──────────────────────────────┐
     │ CALCULATE PUBLIC VALUE X     │
     └──────────────────────────────┘

PUBLIC VALUE X    S505

S506 ┌──────────────────────────────┐
     │ CALCULATE REQUIRED           │
     │ OPERATION TIME Tb1 FOR       │
     │ PUBLIC VALUE Y               │
     └──────────────────────────────┘

SHORTER       REQUIRED OPERATION
THAN Tb1         TIME Tb1

S507

S508 ┌──────────────────────────────┐
     │ GENERATE SECRET VALUE b      │
     └──────────────────────────────┘

S510 ┌──────────────────────────────┐   S509 ┌──────────────────────────────┐
     │ SET TIMEOUT TIME TO TIME     │        │                              │
     │ WHEN REQUIRED OPERATION      │        │ CALCULATE PUBLIC VALUE Y     │
     │ TIME Tb1 ELAPSES             │        │                              │
     └──────────────────────────────┘        └──────────────────────────────┘

PUBLIC VALUE Y    S511

S513 ┌──────────────────────────────┐   S512 ┌──────────────────────────────┐
     │ CALCULATE COMMON KEY K       │        │                              │
     └──────────────────────────────┘        │ CALCULATE COMMON KEY K       │
        ┌──────────────────────┐             │                              │
        │  SUCCESSFUL KEY       │             └──────────────────────────────┘
        │  EXCHANGE             │
        └──────────────────────┘
```

FIG. 6

```
      ┌─────────────┐                              ┌──────────────────┐
      │  DEVICE A   │                              │     DEVICE B     │
      └─────────────┘                              │ (LOW-POWERED SIDE)│
                                                   └──────────────────┘
            │          INQUIRE        S601                  │
            │─────────────────────────────────────────────▶│
            │                                               │  ┌────────────────────────────┐ S602
            │                                               │  │ CALCULATE REQUIRED OPERATION│
            │                                               │  │    TIME Tb FOR PUBLIC       │
            │    REQUIRED OPERATION                         │  │ VALUE Y AND COMMON KEY K    │
            │          TIME Tb                              │  └────────────────────────────┘
            │◀──────────────────────────────────────────────│
            │                              S603             │
  ┌──────────────────────────┐ S604          ┌──────────────────────────┐ S605
  │ KNOWN: VARIABLES g, n     │               │ KNOWN: VARIABLES g, n     │
  └──────────────────────────┘               └──────────────────────────┘
  ┌──────────────────────────┐ S606                          │
  │ GENERATE SECRET VALUE a   │                               │
  └──────────────────────────┘                               │
  ┌──────────────────────────┐ S607                          │
  │ CALCULATE PUBLIC VALUE X  │                               │
  └──────────────────────────┘                               │
            │       PUBLIC VALUE X      S608                 │
            │──────────────────────────────────────────────▶│
 SHORTER    │                                    ┌──────────────────────────┐ S609
 THAN Tb    │                                    │ GENERATE SECRET VALUE b   │
            │                                    └──────────────────────────┘
            │                                    ┌──────────────────────────┐ S610
  ┌──────────────────────────┐ S612             │                           │
  │ SET TIMEOUT TIME TO TIME  │                 │ CALCULATE PUBLIC VALUE Y  │
  │ WHEN REQUIRED OPERATION   │                 │                           │
  │ TIME Tb ELAPSES           │                 └──────────────────────────┘
  └──────────────────────────┘                 ┌──────────────────────────┐ S611
            │                                    │                           │
            │                                    │ CALCULATE COMMON KEY K    │
            │                                    │                           │
            │       PUBLIC VALUE Y      S613     └──────────────────────────┘
            │◀───────────────────────────────────────────────│
  ┌──────────────────────────┐ S614
  │ CALCULATE COMMON KEY K    │
  └──────────────────────────┘
       ┌──────────────────┐
       │ SUCCESSFUL KEY   │
       │   EXCHANGE       │
       └──────────────────┘
```

39

F I G. 7

```
  ┌─────────────┐                          ┌──────────────────┐
  │   DEVICE A  │                          │     DEVICE B     │
  │             │                          │ (LOW-POWERED SIDE)│
  └─────────────┘                          └──────────────────┘
```

INQUIRE ——— S701

CALCULATE REQUIRED OPERATION ——— S702
TIME Tb FOR PUBLIC
VALUE Y AND COMMON KEY K

REQUIRED OPERATION
TIME Tb

S704 ╲S703

GENERATE VARIABLES g, n

REPORT ——— S705
VARIABLES g, n

ACQUIRE VARIABLES g, n ——— S706

ACKNOWLEDGE
VARIABLES g, n

S708 ╲S707

GENERATE SECRET VALUE a

CALCULATE PUBLIC VALUE X ——— S709

PUBLIC VALUE X ——— S710

GENERATE SECRET VALUE b ——— S711

S712

SHORTER
THAN Tb

CALCULATE PUBLIC VALUE Y

SET TIMEOUT TIME TO TIME ——— S714
WHEN REQUIRED OPERATION
TIME Tb ELAPSES

CALCULATE COMMON KEY K ——— S713

PUBLIC VALUE Y ——— S715

CALCULATE COMMON KEY K ——— S716

SUCCESSFUL KEY
EXCHANGE

FIG. 8A

```
   ┌─────────────┐                    ┌──────────────────┐
   │  DEVICE A   │                    │    DEVICE B      │
   └─────────────┘                    │ (LOW-POWERED SIDE)│
                                      └──────────────────┘
           │         INQUIRE      S801         │
           │─────────────────────────────────→│
           │                                   │  ┌────────────────────────────┐ S802
           │                                   │  │ CALCULATE REQUIRED OPERATION│
           │                                   │  │    TIME Tb FOR PUBLIC       │
           │   REQUIRED OPERATION              │  │ VALUE Y AND COMMON KEY K    │
           │       TIME Tb                     │  └────────────────────────────┘
           │←──────────────────────────────────│
  ┌─────────────────────────┐ S804    S803     │
  │ GENERATE VARIABLES g, n  │                  │
  └─────────────────────────┘                  │
           │         REPORT                     │
           │     VARIABLES g, n      S805        │
           │───────────────────────────────────→│
           │                         ┌──────────────────────────┐ S806
           │                         │  ACQUIRE VARIABLES g, n   │
           │   ACKNOWLEDGE   S807     └──────────────────────────┘
           │   VARIABLES g, n                   │
           │←───────────────────────────────────│
  ┌─────────────────────────┐ S808    ┌──────────────────────────┐ S811
  │ GENERATE SECRET VALUE a  │         │ GENERATE SECRET VALUE b  │
  └─────────────────────────┘         └──────────────────────────┘
  ┌─────────────────────────┐ S809     ┌──────────────────────────┐ S812
  │ CALCULATE PUBLIC VALUE X │         │                          │
  └─────────────────────────┘  PUBLIC  │                          │
           │              VALUE X      │  CALCULATE PUBLIC VALUE Y │
           │─────────────────────────→ │                          │
           │              S813          └──────────────────────────┘
           │                                    │
  ┌─────────────────────────┐ S815     ┌──────────────────────────┐ S814
  │ SET TIMEOUT TIME TO TIME │         │                          │
  │ WHEN REQUIRED OPERATION  │         │  CALCULATE COMMON KEY K   │
  │ TIME Tb ELAPSES          │         │                          │
  └─────────────────────────┘         └──────────────────────────┘
           │     PUBLIC VALUE Y   S816          │
           │←───────────────────────────────────│
  ┌─────────────────────────┐ S817              │
  │ CALCULATE COMMON KEY K   │                  │
  └─────────────────────────┘                  │
         ┌──────────────────┐                   │
         │ SUCCESSFUL KEY    │                   │
         │   EXCHANGE        │                   │
         └──────────────────┘                   │
```

FIG. 8B

```
   ┌──────────────┐                              ┌──────────────────┐
   │   DEVICE A   │                              │     DEVICE B     │
   │              │                              │ (LOW-POWERED SIDE)│
   └──────────────┘                              └──────────────────┘
          │              INQUIRE        S801            │
          │─────────────────────────────────────────────▶│
          │                                              │    ┌──────────────────────┐  S822
          │                                              │────│ CALCULATE REQUIRED   │
          │       REQUIRED OPERATION                     │    │ OPERATION TIME Tb1 FOR│
          │           TIME Tb1                           │    │ PUBLIC VALUE Y       │
          │◀─────────────────────────────────────────────│    └──────────────────────┘
          │                   S804        S823           │
   ┌──────────────────────┐                              │
   │ GENERATE VARIABLES g, n│                            │
   └──────────────────────┘        REPORT               │
          │              VARIABLES g, n    S805          │
          │─────────────────────────────────────────────▶│
          │                                              │    ┌──────────────────────┐  S806
          │          ACKNOWLEDGE        S807             │────│ ACQUIRE VARIABLES g, n│
          │         VARIABLES g, n                       │    └──────────────────────┘
          │◀─────────────────────────────────────────────│
          │                   S808                       │    ┌──────────────────────┐  S811
   ┌──────────────────────┐                              │────│ GENERATE SECRET VALUE b│
   │ GENERATE SECRET VALUE a│                            │    └──────────────────────┘
   └──────────────────────┘                              │                          S812
          │                   S809                       │    ┌──────────────────────┐
   ┌──────────────────────┐                              │────│                      │
   │ CALCULATE PUBLIC VALUE X│        PUBLIC             │    │ CALCULATE PUBLIC VALUE Y│
   └──────────────────────┘          VALUE X            │    │                      │
          │─────────────────────────────────────────────▶│    │                      │
          │                   S813                       │    └──────────────────────┘
   ┌──────────────────────┐                              │
   │ SET TIMEOUT TIME TO TIME│  S835                     │
   │ WHEN REQUIRED OPERATION │                           │
   │ TIME Tb1 ELAPSES        │                           │
   └──────────────────────┘        PUBLIC VALUE Y  S836 │                          S838
          │◀─────────────────────────────────────────────│    ┌──────────────────────┐
   ┌──────────────────────┐                              │────│                      │
   │ CALCULATE COMMON KEY K │  S837                      │    │ CALCULATE COMMON KEY K│
   └──────────────────────┘                              │    │                      │
       ┌─────────────────┐                               │    └──────────────────────┘
       │ SUCCESSFUL KEY  │                               │
       │   EXCHANGE      │                               │
       └─────────────────┘                               │
          │                                              │
```

# F I G. 9 A

```
         ┌──────────────┐                          ┌──────────────────┐
         │   DEVICE A   │                          │     DEVICE B     │
         └──────────────┘                          │ (LOW-POWERED SIDE)│
                                                    └──────────────────┘
```

| DEVICE A | DEVICE B (LOW-POWERED SIDE) |
|---|---|

KNOWN: VARIABLES g, n    — S901

GENERATE SECRET VALUE a    — S903

CALCULATE PUBLIC VALUE X    — S904

KNOWN: VARIABLES g, n    — S902

PUBLIC VALUE X    S905

CALCULATE REQUIRED OPERATION TIMES Tb1 AND Tb2 FOR PUBLIC VALUE Y AND COMMON KEY K    — S906

REQUIRED OPERATION TIMES Tb1, Tb2    S907

GENERATE SECRET VALUE b    — S908

SET TIMEOUT TIME TO TIME WHEN REQUIRED OPERATION TIME Tb1 ELAPSES    — S910

CALCULATE PUBLIC VALUE Y    — S909

PUBLIC VALUE Y    S911

CALCULATE COMMON KEY K    — S913

WAIT UNTIL REQUIRED OPERATION TIME Tb2 ELAPSES    — S914

CALCULATE COMMON KEY K    — S912

ENCRYPTED DATA    S915

SUCCESSFUL KEY EXCHANGE

EP 1 441 485 A2

F I G. 9 B

```
┌──────────────┐                    ┌──────────────────┐
│   DEVICE A   │                    │     DEVICE B     │
│              │                    │ (LOW-POWERED SIDE)│
└──────────────┘                    └──────────────────┘
```

S901
KNOWN: VARIABLES g, n

S902
KNOWN: VARIABLES g, n

S903
GENERATE SECRET VALUE a

S904
CALCULATE PUBLIC VALUE X

PUBLIC VALUE X    S905

S906
CALCULATE REQUIRED OPERATION TIMES Tb1 AND Tb2 FOR PUBLIC VALUE Y AND COMMON KEY K

REQUIRED OPERATION TIMES Tb1, Tb2
S907

S908
GENERATE SECRET VALUE b

S910
SET TIMEOUT TIME TO TIME WHEN REQUIRED OPERATION TIME Tb1 ELAPSES

S909
CALCULATE PUBLIC VALUE Y

PUBLIC VALUE Y    S911

S913
CALCULATE COMMON KEY K

MESSAGE    S924

S912
CALCULATE COMMON KEY K

S925
SET TIMEOUT TIME TO TIME WHEN REQUIRED OPERATION TIME Tb2 ELAPSES

RESPONSE MESSAGE
S926

SUCCESSFUL KEY EXCHANGE

44

F I G.  1 0 A

DEVICE A
(LOW-POWERED SIDE)

DEVICE B

S1001 CALCULATE REQUIRED OPERATION TIME Ta1 FOR PUBLIC VALUE X

REQUIRED OPERATION TIME Ta1 S1002

S1003 GENERATE VARIABLES g, n

REPORT VARIABLES g, n S1004

S1005 ACQUIRE VARIABLES g, n

ACKNOWLEDGE VARIABLES g, n

S1006

S1007 GENERATE SECRET VALUE a

S1009 SET TIMEOUT TIME TO TIME WHEN REQUIRED OPERATION TIME Ta1 ELAPSES

S1008 CALCULATE PUBLIC VALUE X

PUBLIC VALUE X S1010

S1011 GENERATE SECRET VALUE b

S1012 CALCULATE PUBLIC VALUE Y

S1013 CALCULATE COMMON KEY K

PUBLIC VALUE Y S1014

S1015 CALCULATE COMMON KEY K

SUCCESSFUL KEY EXCHANGE

EP 1 441 485 A2

FIG. 10B

**DEVICE A** (LOW-POWERED SIDE)

**DEVICE B**

S1021 — CALCULATE REQUIRED OPERATION TIMES Ta1 AND Ta2 FOR PUBLIC VALUE X AND COMMON KEY K

REQUIRED OPERATION TIMES Ta1, Ta2 — S1022

S1003 — GENERATE VARIABLES g, n

REPORT VARIABLES g, n — S1004

S1005 — ACQUIRE VARIABLES g, n

ACKNOWLEDGE VARIABLES g, n — S1006

S1007 — GENERATE SECRET VALUE a

S1009 — SET TIMEOUT TIME TO TIME WHEN REQUIRED OPERATION TIME Ta1 ELAPSES

S1008 — CALCULATE PUBLIC VALUE X

PUBLIC VALUE X — S1010

S1011 — GENERATE SECRET VALUE b

S1012 — CALCULATE PUBLIC VALUE Y

S1013 — CALCULATE COMMON KEY K

PUBLIC VALUE Y — S1034

S1035 — CALCULATE COMMON KEY K

S1036 — SET TIMEOUT TIME TO TIME WHEN REQUIRED OPERATION TIME Ta2 ELAPSES

RESPONSE MESSAGE

SUCCESSFUL KEY EXCHANGE

S1037

46

EP 1 441 485 A2

FIG. 11

47

FIG. 12

LIFE OF CURRENT
KEY EXPIRED

CURRENT KEY

NEW KEY

GENERATION OF
NEW KEY

PERIOD IN WHICH
TWO KEYS EXIST

TIME t

t_start
RE-KEY PROCESS
START TIME

t_end
RE-KEY PROCESS
END TIME

end
TIME WHEN PROBLEM OCCURS
IF RE-KEY PROCESS HAS NOT
BEEN COMPLETED

FIG. 13

DEVICE A

DEVICE B
(LOW-POWERED SIDE)

INQUIRE — S1301

S1302 — CALCULATE REQUIRED OPERATION TIMES Ta1 AND Ta2 FOR PUBLIC VALUE X AND COMMON KEY K

CALCULATE REQUIRED OPERATION TIMES Tb1 AND Tb2 FOR PUBLIC VALUE Y AND COMMON KEY K — S1303

REQUIRED OPERATION TIMES Tb1, Tb2

S1304

CALCULATE t_start — S1305

t_start

KNOWN: VARIABLES g, n — S1306

KNOWN: VARIABLES g, n — S1307

GENERATE SECRET VALUE a — S1308

CALCULATE PUBLIC VALUE X — S1309

PUBLIC VALUE X — S1310

GENERATE SECRET VALUE b — S1311

CALCULATE PUBLIC VALUE Y — S1312

SET TIMEOUT TIME TO TIME WHEN REQUIRED OPERATION TIME Tb1+Tb2 ELAPSES — S1314

CALCULATE COMMON KEY K — S1313

PUBLIC VALUE Y — S1315

CALCULATE COMMON KEY K — S1316

t_end

SUCCESSFUL KEY EXCHANGE

t_end

FIG. 14

DEVICE A

DEVICE B
(LOW-POWERED SIDE)

S1401
CALCULATE REQUIRED OPERATION TIMES Ta1 AND Ta2 FOR PUBLIC VALUE X AND COMMON KEY K

S1402
CALCULATE REQUIRED OPERATION TIMES Tb1 AND Tb2 FOR PUBLIC VALUE Y AND COMMON KEY K

S1403
CALCULATE t_startA

S1404
CALCULATE t_startB

t_startB

S1405
GENERATE VARIABLES g, n

ACKNOWLEDGE VARIABLES g, n    S1406

S1407
ACQUIRE VARIABLES g, n

REPORT VARIABLES g, n    S1408

t_startA

S1409
GENERATE SECRET VALUE b

S1411
SET TIMEOUT TIME TO TIME WHEN REQUIRED OPERATION TIME Tb1 ELAPSES

S1410
CALCULATE PUBLIC VALUE Y

PUBLIC VALUE Y    S1412

S1413
GENERATE SECRET VALUE a

S1414
CALCULATE PUBLIC VALUE X

S1415
CALCULATE COMMON KEY K

PUBLIC VALUE X

S1416

S1417
CALCULATE COMMON KEY K

t_end

SUCCESSFUL KEY EXCHANGE

t_end

F I G.  1 5

DEVICE A

DEVICE B
(LOW-POWERED SIDE)

INQUIRE — S1501

CALCULATE REQUIRED
OPERATION TIME Taa FOR
PUBLIC VALUE X AND
COMMON KEY K — S1502

CALCULATE REQUIRED
OPERATION TIME Tbb FOR
PUBLIC VALUE Y AND
COMMON KEY K — S1503

REQUIRED OPERATION TIME Tbb — S1504

CALCULATE t_start — S1505

t_start

KNOWN: VARIABLES g, n — S1506

KNOWN: VARIABLES g, n — S1507

GENERATE SECRET VALUE a — S1508

CALCULATE PUBLIC VALUE X — S1509

PUBLIC VALUE X — S1510

DECIDE WHETHER TO GENERATE
NEW KEY OR TO UPDATE — S1511

GENERATE SECRET VALUE b — S1512

DISTRIBUTE PROCESS
LOAD IN TIME

CALCULATE
PUBLIC VALUE Y — S1513

SET TIMEOUT TIME TO TIME
WHEN REQUIRED OPERATION
TIME Tbb ELAPSES — S1515

CALCULATE
COMMON KEY K — S1514

PUBLIC VALUE Y — S1516

CALCULATE COMMON KEY K — S1517

t_end

SUCCESSFUL KEY
EXCHANGE

t_end

F I G.  1 6

```
┌──────────────────────┐                    ┌──────────────────┐
│   DEVICE A (KEY       │                    │    DEVICE B       │
│  ISSUING STATION SIDE)│                    │   (USER SIDE)     │
└──────────────────────┘                    └──────────────────┘
```

S1601

TRANSMIT PUBLIC KEY AND
COMMUNICATION PROCESSING
SOFTWARE

S1602

RECEIVE PUBLIC KEY AND
COMMUNICATION PROCESSING
SOFTWARE — S1603

START COMMUNICATION
PROCESSING SOFTWARE — S1604

GENERATE AND RETAIN
RANDOM DATA — S1605

INPUT PERSONAL INFORMATION
AND PASSWORD — S1606

ENCRYPT RANDOM NUMBER DATA,
PERSONAL INFORMATION,
AND PASSWORD WITH PUBLIC KEY — S1607

TRANSMIT ENCRYPTED DATA — S1608

S1609

RECEIVE DATA ENCRYPTED
WITH PUBLIC KEY — S1610

# FIG. 17

```
DEVICE A          CONTROL CENTER          DEVICE B

              g、n                    S1701
```

S1702

CALCULATE PUBLIC VALUE X
IN DH SCHEME

S1704

CALCULATE PUBLIC VALUE Y
IN DH SCHEME

S1703

ENCRYPT X WITH PUBLIC KEY
OF CONTROL CENTER = $X^*$

S1705

ENCRYPT Y WITH PUBLIC KEY
OF CONTROL CENTER = $Y^*$

$X^*$          S1706          $Y^*$          S1707

S1708

DECRYPT $X^*$ AND $Y^*$ WITH ITS OWN SECRET KEY

S1709

$t = X$ XOR $Y$

S1710

ENCRYPT $t$ WITH ITS OWN
SECRET KEY = $t^*$

$t^*$          S1712          $t^*$          S1711

S1713

DECRYPT $t^*$ WITH PUBLIC KEY
OF CONTROL CENTER = $t$
(AUTHENTICATION BY CONTROL
CENTER)

S1716

DECRYPT $t^*$ WITH PUBLIC KEY
OF CONTROL CENTER = $t$
(AUTHENTICATION BY CONTROL
CENTER)

S1714

$Y = t$ XOR $X$

S1717

$X = t$ XOR $Y$

S1715

CALCULATE SECRET KEY K IN
DH SCHEME

S1718

CALCULATE SECRET KEY K IN
DH SCHEME

FIG. 18

```
  ┌─────────────┐                          ┌──────────────────┐
  │  DEVICE A   │                          │    DEVICE B      │
  │             │                          │ (LOW-POWERED SIDE)│
  └─────────────┘                          └──────────────────┘
        │                                          │
  ┌─────────────────────────┐  S1801    ┌─────────────────────────┐  S1802
  │ KNOWN: VARIABLES g, n   │           │ KNOWN: VARIABLES g, n   │
  └─────────────────────────┘           └─────────────────────────┘
  ┌─────────────────────────┐  S1803
  │ GENERATE SECRET VALUE a │
  └─────────────────────────┘
  ┌─────────────────────────┐  S1804
  │ CALCULATE PUBLIC VALUE X│
  └─────────────────────────┘
                PUBLIC VALUE X        S1805
                ──────────────────────────▶
                                           ┌─────────────────────────┐  S1806
                                           │ GENERATE SECRET VALUE b │
                                           └─────────────────────────┘
                                           ┌─────────────────────────┐  S1807
                                           │ CALCULATE PUBLIC VALUE Y│
                                           └─────────────────────────┘
                                           ┌─────────────────────────┐  S1808
                                           │ CALCULATE COMMON KEY K  │
                                           └─────────────────────────┘
              PUBLIC VALUE Y    S1809
                ◀──────────────────────────
  ┌─────────────────────────┐  S1810
  │ CALCULATE COMMON KEY K  │
  └─────────────────────────┘
        │  SUCCESSFUL KEY
        │    EXCHANGE
                                   S1811
        ◀═════════════════════════════════════════▶
            ENCRYPTED DATA CAN BE
            TRANSMITTED AND RECEIVED
            BY USING COMMON KEY K
```

F I G. 1 9

INITIATOR          RESPONDER

Phase1

NEGOTIATION OF VARIOUS PARAMETERS                    S1901

ENCRYPTION ALGORITHM,
PARAMETERS (g, n) IN DH SCHEME, ETC.

DH EXCHANGE                                          S1902

COMMON KEY : K_Phase1          COMMON KEY : K_Phase1

S1903          AUTHENTICATION
               (IDENTITY CONFIRMATION)

ENCRYPT/
AUTHENTICATION
(FOR KEY EXCHANGE)

Phase2

PARAMETER NEGOTIATION/          S1904
DH EXCHANGE

COMMON KEY :          COMMON KEY :
K_Phase2              K_Phase2

S1905

ENCRYPTION/
AUTHENTICATION
(FOR ACTUAL DATA)

FIG. 20